# EUROPEAN PATENT APPLICATION

(11) **EP 2 039 656 A1**
(43) Date of publication of application: **25.03.2009**
(21) Application number: 07767677.3
(22) Date of filing: 27.06.2007
(51) Int. Cl.: C02F 1/46, C02F 5/00, F28F 19/01

(54) **DEIONIZING DEVICE, AND ITS USING METHOD**

(30) Priority: 30.06.2006 JP 2006181219; 30.06.2006 JP 2006181225; 26.06.2007 JP 2007167659
(71) Applicant: Sanyo Electric Co., Ltd., Osaka 570-8677 (JP)
(72) Inventor: OGAWA, Yui, Gunma 370-0533 (JP); KOIZUMI, Tomohito, Ota-shi, Gunma 373-0813 (JP); OE, Hana, Ota-shi, Gunma 373-0861 (JP); UMEZAWA, Hiroyuki, Ota-shi, Gunma 373-0806 (JP)
(74) Representative: Glawe, Delfs, Moll
(86) International application number: PCT/JP2007/062874
(87) International publication number: WO 2008/001801

(57) **Abstract**

There are disclosed an especially inexpensive and compact ion removal device capable of removing ions of scales generated from for-treatment water, a surfactant and the like, and a method for using the device. In an ion removal device S of the present invention, at least a pair of electrodes (a first electrode 6 and a second electrode 7) immersed into for-treatment water are integrated with an surfactant collection material 9 and a scale collection material 8 as ion collection materials. Then, these ion collection materials (the surfactant collection material 9 and the scale collection material 8) are arranged between the first electrode 6 and the second electrode 7.

## Description

### BACKGROUND OF THE INVENTION

The present invention relates to an ion removal device which removes ions of scales, a surfactant and the like from water, and a method for using the device.

Heretofore, in a cooling tower for cooling a cooling target such as a capacitor with water, an electrolytic water generation device for generating electrolytic water, and the like, water has been used. In this water, however, scales are easily generated, and the generated scales attach to a thermally conductive surface, pipes, electrodes and the like to adversely affect them. Therefore, a reagent has periodically been added to the water to prevent the generation of the scales. However, when the reagent is added, the concentration of the reagent to be added and the storage of chemicals need to sufficiently be managed, and the sufficient knowledge of the reagent to be used is required. From viewpoints of such a laborious operation, danger in handling the reagent, further the influence of a reagent treatment on a circumstance load and the like, technologies to remove the scales without using any reagent have been demanded.

As one of the technologies, an attempt to electrolyze water and thereby prevent the scales has been made. In this electrolysis treatment, a pair of electrodes are immersed into water, and a voltage is applied between these electrodes to precipitate and deposit hard components such as calcium carbonate and magnesium silicate on the surface of an anode. Next, the polarity of the electrodes is converted to peel the scale components from the electrode, and then these scale components are collected by another device to remove such hard components. Then, the water (water to be treated (hereinafter referred to as "the for-treatment water")) from which the scales have been removed is used as water for generating cooling water in the cooling tower or electrolytic water in the electrolytic water generation device. In consequence, it is possible to eliminate the disadvantage that the scales are generated on the thermally conductive surfaces of these devices, the inner surfaces of the pipes, the electrodes and the like (e.g., see Patent Document 1).

On the other hand, in a cleaning device such as a washing machine, a surfactant-containing detergent is used in a cleaning step, but an attempt to remove and discharge the surfactant from the water has heretofore been made. As methods for treating surfactant-containing waste water, various methods have been suggested, for example, a method of adding an agglomeration material to the waste water to precipitate the material, followed by filtering, and a method of decomposing and treating the surfactant by UV irradiation.
Patent Document 1: Japanese Patent Application Laid-Open No. 2001-259690

However, the above-mentioned scale removal device requires at least an electrolysis device which performs electrolysis and a collection device which collects the scales peeled from the electrodes, and this causes a problem that the broad installation area of the devices is demanded.

Moreover, the peeled scales might attach to a pipe connecting the electrolysis device to the collection device to clog the pipe with the scales. Furthermore, to peel the scales attached to the electrodes, the polarity needs to be converted, but an operation for peeling the scale components due to the conversion of the polarity deteriorates the electrodes. Therefore, it has been demanded that the devices be operated without performing any polarity conversion, if possible.

Furthermore, in addition to the removal of the scales, to remove the surfactant, a device for removing the surfactant has to be additionally disposed, thereby causing a problem that the whole device further enlarges to incur cost increase. In addition, heretofore, a device capable of removing the scales and the surfactant in one system has not been suggested.

### SUMMARY OF THE INVENTION

The present invention has been developed to solve the problem of such a conventional technology, and an object thereof is to provide an especially inexpensive compact ion removal device capable of removing ions of scales generated from for-treatment water, a surfactant and the like, and a method for using the device.

An ion removal device of the present invention is characterized in that at least a pair of electrodes and ion collection means immersed in for-treatment water are integrated.

The ion removal device according to the invention of a second aspect is characterized in that the above invention further comprises an ion exchange membrane which divides the for-treatment water into the for-treatment water on an anode chamber side where the electrode constituting an anode is positioned and the for-treatment water on a cathode chamber side where the electrode constituting a cathode is positioned, and this ion exchange membrane is integrated with the electrodes and the ion collection means.

The ion removal device according to the invention of a third aspect is characterized in that in the above inventions, the ion collection means is arranged between the electrodes.

The ion removal device according to the invention of a fourth aspect is characterized in that in the invention according to any one of the first to third aspects, the ion collection means is arranged in a position between the downstream side of the first electrode and the upstream side of the second electrode in a flow path through which the for-treatment water is circulated.

The ion removal device according to the invention of a fifth aspect is characterized in that in the invention of the third or fourth aspect, the for-treatment water is circulated from the side of the electrode constituting the cathode to the side of the electrode constituting the anode.

The ion removal device according to the invention of a sixth aspect is characterized in that in the invention according to any one of the first to fifth aspects, the electrodes and the ion collection means are concentrically arranged, and the for-treatment water is circulated from an outer electrode side.

The ion removal device according to the invention of a seventh aspect is characterized in that in the invention according to any one of the first to sixth aspects, the electrodes and the ion collection means have water-passing structure, and this ion collection means is an insulating scale collection material configured to collect scales from the for-treatment water.
The ion removal device according to the invention of an eighth aspect is characterized in that in the invention according to any one of the first to sixth aspects, the electrodes and the ion collection means have water-passing structure, the ion collection means includes an insulating scale collection material configured to collect scales from the for-treatment water, and a conductive surfactant collection material which has a conductive relation with the first electrode only and which is configured to collect a surfactant from the for-treatment water, and the ion collection means controls the value of a current to be applied to the electrodes to selectively execute the scale removal treatment step of the scale collection material and the surfactant removal treatment step of the surfactant collection material.

The ion removal device according to the invention of a ninth aspect is characterized in that the invention of the eighth aspect has means for switching the polarities of potentials to be applied to the electrodes in the surfactant removal treatment step, depending on whether the surfactant is anionic or cationic.

The ion removal device according to the invention of a tenth aspect is characterized in that in the invention of the eighth or ninth aspect, when a negative potential is applied to the first electrode in the surfactant removal treatment step, the current value is set to 500 mA or less.

The ion removal device according to the invention of an eleventh aspect is characterized in that in the invention according to any one of the seventh to tenth aspects, the scale collection material constituting the ion collection means is allowed to carry seed crystals.

The ion removal device according to the invention of a twelfth aspect is characterized in that in the invention according to any one of the seventh to eleventh aspects, the scale collection material constituting the ion collection means shows a color having a complementary color relation with the scales trapped by the scale collection material.

The ion removal device according to the invention of a thirteenth aspect is characterized in that in the invention according to any one of the first to twelfth aspects, the ion collection means has a changeable structure.

The ion removal device according to the invention of a fourteenth aspect is characterized in that in the invention according to any one of the first to thirteenth aspects, the ion collection means is visible from the outside.

A method for using an ion removal device according to the invention of a fifteenth aspect is characterized by predicting a time to change the ion collection material based on a difference between a hydraulic pressure on the inflow side of the for-treatment water and a hydraulic pressure on the outflow side of the for-treatment water in the ion removal device according to any one of the first to fourteenth aspects.

According to the ion removal device of the present invention, at least the pair of electrodes and the ion collection means immersed in the for-treatment water are integrated. Therefore, ions of scales, a surfactant and the like can be collected by the ion collection means and removed from the for-treatment water. Moreover, in a single system an electrolysis treatment can be performed to collect the scales and the surfactant, so that the miniaturization and the cost reduction of the device can be achieved. Furthermore, in the ion collection means, the attached scales are seed crystals, so that scales removal efficiency can be improved.

In particular, as in the invention of the second aspect, the ion removal device further comprises the ion exchange membrane which divides the for-treatment water into the for-treatment water on the anode chamber side where the electrode constituting the anode is positioned and the for-treatment water on the cathode chamber side where the electrode constituting the cathode is positioned, and this ion exchange membrane is integrated with the electrodes and the ion collection means. Therefore, the deposition of the scales can be promoted.

Moreover, in the above inventions, the ion collection means is arranged between the electrodes as in the invention of the third aspect. For example, as in the invention of the fourth aspect, the ion collection means is arranged in the position between the downstream side of the first electrode and the upstream side of the second electrode in the flow path through which the for-treatment water is circulated as in the invention of the fourth aspect, whereby the device can further be miniaturized.

In particular, in the invention of the third or fourth aspect, as in the invention of the fifth aspect, the for-treatment water is circulated from the side of the electrode constituting the cathode to the side of the electrode constituting the anode. In consequence, on the side of the cathode electrode positioned on the upstream side and having ambient alkali properties, a hard component is salt, and the for-treatment water is supplied on the anode electrode side positioned on the downstream side. Therefore, the scale components can efficiently be collected by the ion collection means.

According to the invention of the sixth aspect, in the invention according to any one of the first to fifth aspects, the electrodes and the ion collection means are concentrically arranged, and the for-treatment water is circulated from an outer electrode side. Therefore, a contact area with the electrodes can be increased. In consequence, the ion collection efficiency of the ion collection means can be improved.

According to the invention of the seventh aspect, in the invention according to any one of the first to sixth aspects, the electrodes and the ion collection means have water-passing structure, and this ion collection means is the insulating scale collection material configured to collect the scales from the for-treatment water. Therefore, while circulating the for-treatment water without any trouble, the scales can be collected. In particular, when the ion collection means is arranged in the position on the downstream side of the first electrode and the upstream side of the second electrode in the flow path of the circulated for-treatment water as in the third aspect, the negative potential is applied to the first electrode, whereby the scales deposed by the first electrode can be discharged to the downstream side of the electrode, and collected by the scale collection material. In consequence, a disadvantage that short circuit between the electrodes is generated by the scales can be eliminated as much as possible.

According to the invention of the eighth aspect, in the invention according to any one of the first to sixth aspects, the electrodes and the ion collection means have water-passing structure, the ion collection means includes the insulating scale collection material configured to collect the scales from the for-treatment water, and the conductive surfactant collection material which has a conductive relation with the first electrode only and which is configured to collect the surfactant from the for-treatment water, and the ion collection means controls the value of the current to be applied to the electrodes to selectively execute the scale removal treatment step of the scale collection material and the surfactant removal treatment step of the surfactant collection material. For example, control is executed so that the value of the current applied to the electrodes is large in the scale removal treatment step and so that the value of the current applied to the electrodes is small in the surfactant removal treatment step. In consequence, while circulating the for-treatment water without any trouble, the scales and the surfactant can be collected. Especially in the surfactant removal treatment step, the surfactant can be removed from the for-treatment water with the a value remarkably smaller than that of the current to be applied to the electrodes in the scale removal treatment step, so that power consumption can remarkably be decreased.

In particular, when the ion collection means is arranged in the position on the downstream side of the first electrode and the upstream side of the second electrode in the flow path of the circulated for-treatment water as in the third aspect, the negative potential is applied to the first electrode in the scale removal treatment step, whereby the scales deposed by the first electrode can be collected by the scale collection material on the downstream side of the first electrode. Moreover, in a surfactant collection removal step, a potential different from a potential with which the surfactant is charged is applied to the surfactant collection material, the surfactant can be attracted and collected by the surfactant collection material.

Furthermore, as in the invention of the ninth aspect, the ion removal device has the means for switching the polarities of potentials to be applied to the electrodes in the surfactant removal treatment step, depending on whether the surfactant is anionic or cationic. Therefore, when the anionic surfactant is treated, the above means is operated to charge the surfactant collection material with a positive potential, the surfactant collection material can effectively collect the anionic surfactant. Moreover, when the cationic surfactant is treated, the above means is operated to charge the surfactant collection material with the negative potential, the surfactant collection material can effectively collect the cationic surfactant.

In particular, when the anionic surfactant is treated, the positive potential is applied to the first electrode as described above to charge the surfactant collection material with the positive potential, and the surfactant collection material collects the anionic surfactant. However, in this case, the for-treatment water around the surfactant collection material charged with the positive potential is oxidized, and a hydroxide ion discharges power to generate oxygen, thereby obtaining acidic water. Therefore, when the voltage is applied to the electrode with a high current value, a large amount of oxygen having a high oxidation power is generated, the surfactant collection material is corroded, and durability is remarkably lowered. To solve the problem, when the negative potential is applied to the first electrode as in the invention of the tenth aspect, the current value is controlled into 500 mA or less, whereby the corrosion of the surfactant collection material can be inhibited. In consequence, the anionic surfactant can stably be removed.

Moreover, in the invention according to any one of the seventh to tenth aspects, as in the invention of the eleventh aspect, the scale collection material constituting the ion collection means is allowed to carry the seed crystals. Therefore, the scales can further easily attach to the scale collection material, and the collection efficiency can further be improved.

Furthermore, in the invention according to any one of the seventh to eleventh aspects, as in the invention of the twelfth aspect, the scale collection material constituting the ion collection means shows the color having the complementary color relation with the scales trapped by the scale collection material. Therefore, the scales collected by the scale collection material can visually be observed.

According to the invention of the thirteenth aspect, in the invention according to any one of the first to twelfth aspects, the ion collection means has the changeable structure. Therefore, the ion collection means to which the ions have attached can easily be changed.

According to the invention of the fourteenth aspect, in the invention according to any one of the first to thirteenth aspects, the ion collection means is visible from the outside. Therefore, the time to change the ion collection means can be grasped.

Furthermore, as in the method for using the ion removal device of each of the above inventions in the invention of the fifteenth aspect, the time to change the ion collection material is predicted based on the difference between the hydraulic pressure on the inflow side of the for-treatment water and the hydraulic pressure on the outflow side of the for-treatment water, whereby the time to change the ion collection material can securely be grasped. In consequence, the ions can be collected in a constantly satisfactory state.

### BRIEF DESCRIPTION OF THE DRAWINGS

FIG. 1 is a schematic explanatory diagram of a washing machine to which an ion removal device of the present invention is applied (Embodiment 1);
FIG. 2 is a diagram showing the flow of water in the washing machine of FIG. 1;
FIG. 3 is a schematic explanatory diagram of one example of the ion removal device according to the present invention applied to the washing machine of FIG. 1;
FIG. 4 is a diagram showing the removal ratio of the surfactant in the for-treatment water accompanying the change of a current value;
FIG. 5 is a diagram showing the removal ratio of the surfactant in the for-treatment water accompanying the change of treatment time;
FIG. 6 is a schematic explanatory diagram in a case where the ion removal device of the present invention is applied to a cooling tower (Embodiment 2);
FIG. 7 is a schematic explanatory diagram of the ion removal device of FIG. 6;
FIG. 8 is an appearance diagram of the ion removal device of FIG. 6;
FIG. 9 is an appearance diagram of another example of the ion removal device of FIG. 8;
FIG. 10 is a schematic explanatory diagram showing one example in which the ion removal device of FIG. 7 is applied to an electrolytic water generation device (Embodiment 3);
FIG. 11 is a vertical side view of an ion removal device according to a fourth embodiment (Embodiment 4);
FIG. 12 is an appearance diagram of the ion removal device of FIG. 12;
FIG. 13 is an appearance diagram of an ion removal device according to a fifth embodiment (Embodiment 5);
FIG. 14 is a schematic explanatory diagram of the ion removal device of FIG. 13;
FIG. 15 is a plan view of the ion removal device of FIG. 14;
FIG. 16 is a plan view of another example of the ion removal device of FIG. 14;
FIG. 17 is a vertical side view of one example of the ion removal device having a constitution in which a treatment tank can be disassembled;
FIG. 18 is a schematic explanatory diagram of an ion removal device of a sixth embodiment;
FIG. 19 is a schematic explanatory diagram of an ion removal device of a seventh embodiment;
FIG. 20 is a schematic explanatory diagram of an ion removal device of an eighth embodiment;
FIG. 21 is a schematic explanatory diagram in a case where the ion removal device of FIG. 20 is applied to a cooling tower;
FIG. 22 is a schematic explanatory diagram showing one example in which the ion removal device of FIG. 20 is applied to an electrolytic water generation device;
FIG. 23 is a schematic explanatory diagram of an ion removal device of a ninth embodiment;
FIG. 24 is a schematic explanatory diagram of an ion removal device of a tenth embodiment;
FIG. 25 is a schematic explanatory diagram of an ion removal device of an eleventh embodiment;
FIG. 26 is a schematic explanatory diagram of an ion removal device of a twelfth embodiment; and
FIG. 27 is a schematic explanatory diagram of an ion removal device of a thirteenth embodiment.

### DETAILED DESCRIPTION OF THE PREFERRED EMBODIMENT

An ion removal device of the present invention removes ions of scales, a surfactant and the like from for-treatment water, and can be applied to various devices using for-treatment water, for example, a cleaning device which cleans clothes, tableware and the like, a cooling target which cools a cooling target such as a capacitor, and an electrolytic water generation device which electrolyzes water to generate sterilized water such as hypochlorous acid water or acid water and electrolytic water such as ion water. Embodiments of the present invention will hereinafter be described in detail with reference to the drawings.

### Embodiment 1

First, a case where an ion removal device of the present invention is applied to a cleaning device. In the present embodiment, a case where the ion removal device of the present invention is applied to a washing machine W for use in washing clothes and the like will be described as an example. Specifically, the ion removal device of the present invention is installed in a water discharge passage to remove a surfactant, scales and the like included in washing water and rinse water.

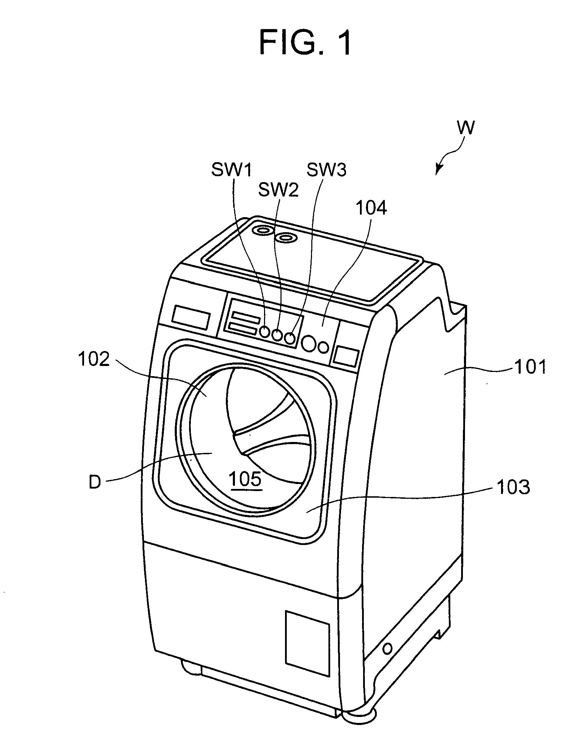

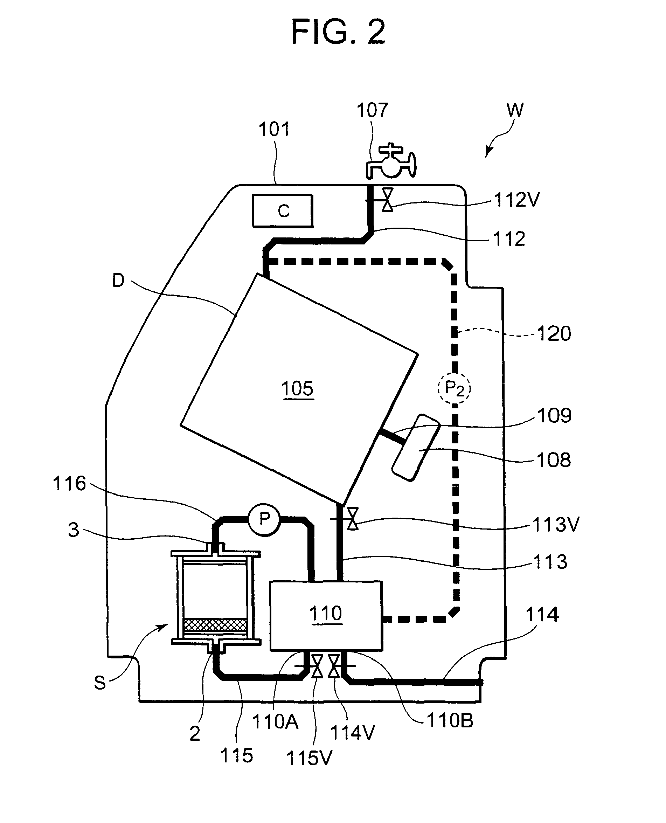

FIG. 1 is a schematic explanatory diagram of a washing machine W to which the ion removal device of the present invention is applied, and FIG. 2 is a diagram showing the flow of the water in the washing machine W of FIG. 1.

The washing machine W of the present embodiment is used in cleaning washing targets such as the clothes, and is composed of a main body 101 constituting an outer shell. An opening door 103 for removing and supplying the washing target is attached to the front surface of this main body 101, and the upper part of the front surface of the main body 101 positioned on the upside of the opening/closing door 103 is provided with an operation panel 104 on which various operation switches and a display section are provided.

In the main body 101, a drum main body D is provided which includes an outer drum (not shown) made of a resin and an inner drum 102 made of stainless steel, arranged on the inner side of this outer drum and serving as both a cleaning tub and a dewatering tub. Both of the outer drum and the inner drum 102 have a bottomed cylindrical shape, and are arranged so that an axis of a cylinder has an oblique direction extending from an upper front part to a lower rear part and so that an upper end opening has an obliquely upward direction toward the opening/closing door 103 provided in the main body 101. Moreover, the inside of the inner drum 102 is a storage chamber 105 in which the washing target is received, a rotary shaft (not shown) of the inner drum 102 is connected to a shaft 109 of a driving motor 108 attached to the outer drum, and the inner drum 102 is held in the outer drum so as to be rotatable around the rotary shaft of the inner drum 102 connected to the shaft 109. Furthermore, the whole peripheral wall of the inner drum 102 is provided with a large number of through holes (not shown) through which air and water (for-treatment water) can be circulated.

The above-mentioned driving motor 108 is a motor for rotating the inner drum 102 around the shaft 109 in a cleaning step and a rinse step during a washing operation. It is to be noted that driving control of the driving motor 108 is executed by a control unit C described later in detail. This driving motor 108 is attached to the other end of the shaft 109.

The upper part of the main body 101 is provided with a water feed passage 112, and one end of this water feed passage 112 is connected to a water feed source 107 for feeding city water into the inner drum 102 via a water feed valve 112V. This water feed valve 112V is controlled to open and close by the control unit C.

Moreover, the other end of the water feed passage 112 communicates with the inside of the outer drum. It is constituted that when the water feed valve 112V is opened by the control unit C, the water (the city water) is fed from the water feed source 107 into the storage chamber of the inner drum 102 provided in the outer drum.

Furthermore, the lower part of the outer drum is connected to one end of a waste water passage 113 for discharging, from the storage chamber 105, cleaning water and rinse water used in the storage chamber 105, and the other end of this waste water passage 113 is connected to a storage tank 110 via a waste water valve 113V. Then, the lowermost part of the storage tank 110 is provided with two outlets 110A, 110B. One outlet 110A is connected to one end of a circulation passage 115, and the other end of this circulation passage 115 is connected to an inflow port 2 of an ion removal device S of the present invention via a circulation valve 115V. The ion removal device removes ions of scales, a surfactant and the like from the cleaning water, the rinse water and the like (the for-treatment water) received in the storage tank 110.

Moreover, the upper end of the ion removal device S is provided with an outflow port 3, and the outflow port 3 is connected to one end of a circulation passage 116. Then, the circulation passage 116 extends externally from the ion removal device S via one end of the passage connected to the outflow port 3 of the ion removal device S, and the other end of the circulation passage is connected to the storage tank 110 via a pump P. The other outlet 110B formed in the lowermost part of the storage tank 110 is connected to one end of an external waste water passage 114. Then, the other end of the external waste water passage 114 opens in a waste water ditch outside the washing machine W via an external waste water valve 114V, so that the waste water of the washing machine W can be discharged externally from the passage. The operation of the pump P and the opening/closing of the external waste water valve 114V and the circulation valve 115V are controlled by the control unit C.

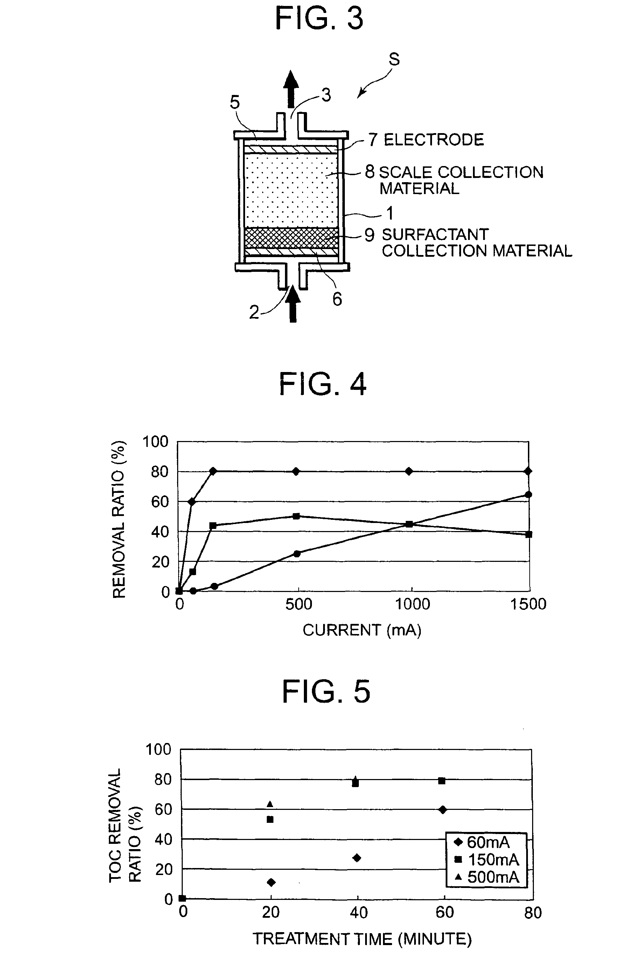

Here, the ion removal device S will be described in detail with reference to FIG. 3. FIG. 3 is a schematic explanatory diagram of the ion removal device S installed in the lower part of the main body 101 of the washing machine W. The ion removal device S of the present embodiment is composed of a treatment tank 1 constituting an electrolysis chamber 5 having therein the inflow port 2 and the outflow port 3 for the for-treatment water; a pair of electrodes (i.e., a first electrode 6 and a second electrode 7) arranged so that the electrodes face each other and are immersed in the for-treatment water of the treatment tank 1; a surfactant collection material 9 immersed in the for-treatment water described later; a scale collection material 8 immersed in the for-treatment water described later and the like. A voltage is applied from the control unit C so that a current value between the pair of electrodes 6 and 7 becomes constant (a constant current).

The treatment tank 1 of the present embodiment has a vertically long cylindrical shape, the lower end of the treatment tank is provided with the inflow port 2 for supplying the for-treatment water into the electrolysis chamber 5, and the upper end of the treatment tank is provided with the outflow port 3 for discharging the for-treatment water from the electrolysis chamber 5. A flow path is formed in the electrolysis chamber 5 so that the for-treatment water circulates from the inflow port 2 to the outflow port 3. Moreover, in the ion removal device S of the present embodiment, it is constituted that at least a part of the treatment tank 1 can be disassembled. Specifically, it is constituted that the upper surface or the lower surface of the treatment tank 1 can be disassembled. In consequence, When the surfactant collection material 9 or the scale collection material 8 are changed, the upper surface or the lower surface is removed to disassemble the treatment tank 1, and it is possible to remove the surfactant collection material 9 and the scale collection material 8 integrated with the first and second electrodes 6, 7 received in the treatment tank. The first and second electrodes 6, 7 are made of, for example, a unitary material such as platinum (Pt), carbon, titanium or stainless steel, or a porous material obtained by processing a conductor including one of platinum (Pt), carbon, titanium and stainless steel into a mesh-like, fibrous or punching-plate-like shape. In particular, each of the electrodes 6, 7 is preferably a conductor of an insoluble electrode made of platinum (Pt) or an electrode coated with platinum. It is to be noted that the material of the electrode is not limited to the above material, and another electrode may be constituted as the conductor.

In the present embodiment, as the first and second electrodes 6, 7, electrodes obtained by processing platinum into the whole mesh-like disc shape may be used. That is, as to both the electrodes 6, 7, the material is processed into a mesh-like state to have such water-passing structure that the for-treatment water can be circulated. Each mesh-like electrode is formed into the whole disc shape, specifically a disc shape having an outer diameter equal to the inner diameter of the vertically long cylindrical treatment tank 1. Moreover, the first and second electrodes 6, 7 are connected to the control unit C, and the control unit C controls power supply to the electrodes 6, 7 and the value of the current to be supplied to the electrodes 6, 7.

The surfactant collection material 9 and the scale collection material 8 are ion collection means for removing ions of the scale from the for-treatment water, and are arranged between the first electrode 6 and the second electrode 7. That is, the surfactant collection material 9 and the scale collection material 8 of the present embodiment are arranged in positions on the downstream side of the first electrode 6 and the upstream side of the second electrode 7 in the flow path of the for-treatment water to be circulated in the ion removal device S of the present invention.

Specifically, the surfactant collection material 9 has a conductive relation with respect to the first electrode 6 only, and is made of a conductor capable of collecting the surfactant from the for-treatment water and having such water-passing structure that the for-treatment water can be circulated. The surfactant collection material 9 of the present embodiment is arranged so as to come in close contact with the upper surface of the first electrode on the downstream side of the first electrode 6 in the flow path.

The scale collection material 8 is provided so as to abut on the upper surface of the surfactant collection material 9 on the downstream side of the surfactant collection material 9 in the flow path. That is, the scale collection material 8 is interposed between the surfactant collection material 9 and the second electrode 7. This scale collection material 8 is an insulator capable of collecting the scales from the for-treatment water, and as the scale collection material, an insulating material, for example, a synthetic resin such as polypropylene (PP), polyethylene (PE) or acryl or a ceramic material such as alumina or zeolite is processed into a porous material in the same manner as described above or into a particle-like shape, non-woven cloth, hollow yarn felt or the like. The scale collection material 8 of the present embodiment is also provided with such water-passing structure that the for-treatment water can be circulated. It is to be noted that the surfactant collection material 9 and the scale collection material 8 of the present embodiment have a vertically long columnar shape having an outer diameter substantially equal to that of the electrodes 6, 7.

On the other hand, in the ion removal device S, the electrodes 6, 7 are integrated with the ion collection means including the surfactant collection material 9 and the scale collection material 8. That is, the ion collection means including the surfactant collection material 9 and the scale collection material 8 is vertically held between the electrodes 6 and 7, and integrated. In the present embodiment, the surfactant collection material 9 as the ion collection means abuts on the upper surface of the first electrode 6, the scale collection material 8 abuts on the upper surface of this surfactant collection material 9, and the second electrode 7 abuts on the upper surface of the scale collection material 8, respectively, and these components are stored in the electrolysis chamber 5 of the treatment tank 1.

In addition, to assemble the ion removal device S having the above constitution, first the scale collection material 8 is brought into contact with the upper end face of the surfactant collection material 9 to form the ion collection means. Then, the second electrode 7 is attached to the upper end face (the upper end face of the scale collection material 8), and the first electrode 6 is attached to the lower end face (the lower end face of the surfactant collection material 9), respectively. In consequence, the first and second electrodes 6, 7 and the ion collection means (the surfactant collection material 9 and the scale collection material 8) are integrated. Afterward, the integrated first and second electrodes 6, 7 and the ion collection means (the surfactant collection material 9 and the scale collection material 8) are inserted from one of the upper surface and the lower surface of the treatment tank 1, and received in the treatment tank 1. For example, when both the electrodes 6, 7, the surfactant collection material 9 and the scale collection material 8 are inserted from the upper surface of the treatment tank 1, the electrodes 6, 7, the surfactant collection material 9 and the scale collection material 8 are inserted from the upside of the treatment tank 1, and received in the predetermined position of the treatment tank 1. Afterward, the upper surface is attached and fixed with screws, whereby the ion removal device S can easily be assembled.

As described above, in the ion removal device S of the present invention, the electrodes 6, 7 and the ion collection means including the surfactant collection material 9 and the scale collection material 8 are integrated, so that an electrolysis treatment and the collection of the scales and the surfactant can be performed in a single system (in the treatment tank 1). In consequence, the device can be miniaturized. In particular, the ion collection means (the surfactant collection material 9 and the scale collection material 8) is arranged in the position on the downstream side of the first electrode 6 and the upstream side of the second electrode 7 in the flow path of the for-treatment water to be circulated between the electrodes 6 and 7, so that the ion removal device S can further be miniaturized.

It is to be noted that the operation of the washing machine W of the present embodiment is controlled by the above-mentioned control unit C. This control unit C is control means for controlling the washing machine W, for example, the driving of the driving motor 108, the opening/closing of the water feed valve 112V of the water feed passage 112, the opening/closing of the waste water valve 113V of the waste water passage 113, the opening/closing of the external waste water valve 114V of the external waste water passage 114, the power supply to the first and second electrodes 6, 7 and the like. The control unit is composed of a general-purpose microcomputer. In particular, the control unit C controls the value of the current to the first and second electrodes 6, 7 to selectively execute the scale removal treatment step of the scale collection material 8 and the surfactant removal treatment step of the surfactant collection material 9. In a scale removal treatment, the for-treatment water is circulated from an electrode side as a cathode to an electrode side as an anode to deposit hard components in the for-treatment water as the scales on the anode-side surface of the electrode constituting the cathode. These scales are collected by the scale collection material 8 and removed from the for-treatment water. In this case, in the scale removal treatment step, the control unit C applies a negative potential to the first electrode 6 and the surfactant collection material 9 on the upstream side in the flow path of the for-treatment water, and a positive potential is applied to the second electrode 7 on the downstream side. In consequence, the hard components in the for-treatment water are deposited as the scales on the anode-side surface (the upper surface) of the surfactant collection material 9 constituting the cathode, and the deposited scales are trapped by the scale collection material 8 on the downstream side and can be collected by the scale collection material 8.

Moreover, in the surfactant removal treatment step, a potential different from a potential with which the surfactant is charged is applied to the surfactant collection material 9, and this surfactant collection material 9 collects the surfactant. In this case, the surfactant included in a detergent falls into an anionic surfactant or a cationic surfactant in accordance with the type of the detergent for use. Therefore, the polarities of the potentials to be applied to the first electrode 6 and the second electrode 7 need to be switched in accordance with the detergent for use. For example, when the anionic surfactant is subjected to the removal treatment (i.e., when the detergent including the anionic surfactant is used), the positive potential is applied to the first electrode 6 and the surfactant collection material 9, and the negative potential is applied to the second electrode 7, whereby the anionic surfactant is attached to the surfactant collection material 9, and the anionic surfactant can be removed from the for-treatment water.

On the other hand, when the cationic surfactant is subjected to the removal treatment (i.e., when the detergent including the cationic surfactant is used), the polarities of the first electrode 6 and the second electrode 7 are switched. That is, the negative potential is applied to the first electrode 6 and the surfactant collection material 9, and the positive potential is applied to the second electrode 7, whereby the cationic surfactant is attached to the surfactant collection material 9, and the cationic surfactant can be removed from the for-treatment water.

In the present embodiment, the above-mentioned operation panel 104 is provided with operation switches SW1, SW2 and SW3 for selecting the above removal treatment steps, and it is constituted that the treatment to be executed with respect to the for-treatment water can be selected by the operations of the operation switches SW1, SW2 and SW3. That is, the operation switches SW1 and SW2 are switch means for switching the polarities of the potentials to be applied to the electrodes 6, 7 in the surfactant removal treatment step, depending on whether the surfactant is anionic or cationic. When a user selects the operation switch SW1, the control unit C applies the positive potential to the first electrode 6, and applies the negative potential to the second electrode 7 with a comparatively low current value described later. In consequence, the surfactant collection material 9 and the first electrode 6 constitute the anode, and the second electrode 7 constitutes the cathode. When the user selects the operation switch SW2, the control unit C applies the negative potential to the first electrode 6, and applies the positive potential to the second electrode 7 with the comparatively low current value described later. In consequence, the surfactant collection material 9 and the first electrode 6 constitute the cathode, and the second electrode 7 constitutes the anode. Here, as described above, the surfactant included in the detergent falls into the anionic surfactant or the cationic surfactant in accordance with the type of the detergent. Therefore, for easy understanding by the user, the name of the detergent including the anionic surfactant may be shown on the switch SW1, and the name of the detergent including the cationic surfactant may be shown on the switch SW2.

Moreover, the operation switch SW3 is a switch for selecting a treatment mode to remove the scales. When the user selects this operation switch SW3, the control unit C applies the negative potential to the first electrode 6, and applies the positive potential to the second electrode 7 with a high current value described later. In consequence, the surfactant collection material 9 and the first electrode 6 constitute the cathode, and the second electrode 7 constitutes the anode.

Here, in the treatment of the for-treatment water by use of the ion removal device S of the present embodiment, the value of the current to be supplied to the electrodes 6, 7 and treatment time were specifically studied. First, the for-treatment water was circulated and supplied to the ion removal device S of the present invention repeatedly for a certain time, and the value of the current flowing through the electrodes 6, 7 was varied to check the removal ratio of the surfactant and the scales in the for-treatment water. In this case, standard water including 65.22 mg/L of hard components was used. To check the removal of the scales, the standard water was used as the for-treatment water. To check the removal of the anionic surfactant, water obtained by adding the detergent containing the anionic surfactant to this standard water was used as the for-treatment water. To check the removal of the cationic surfactant, water obtained by adding the detergent containing the cationic surfactant to the standard water was used as the for-treatment water. It is to be noted that as the surfactant collection material 8, a carbon fiber having a diameter of 40 mm and a surface area of 12.56 cm² was used.

FIG. 4 shows the removal ratios of the surfactant and the scales in the for-treatment water in a case where the for-treatment water was repeatedly circulated through the ion removal device S for 60 minutes to change the current value. In FIG. 4, the ordinate indicates the removal ratio, and the abscissa indicates the current value. Moreover, a rhombic plot indicates the cationic surfactant, a square plot indicates the anionic surfactant, and a black circle plot indicates the scales, respectively.

As shown in FIG. 4, it is seen that in a case where the for-treatment water is circulated through the ion removal device S of the present embodiment repeatedly for 60 minutes, when the for-treatment water includes the cationic surfactant and the current value is 60 mA, about 60% of the cationic surfactant can be removed from the for-treatment water. It is also seen that when the current value is 150 mA or more, about 80% of the cationic surfactant can be removed from the for-treatment water. Moreover, when the for-treatment water includes the anionic surfactant and a constant current of 150 milliamperes (mA) is applied to the electrodes 6, 7, 43% of the anionic surfactant can be removed from the for-treatment water. When the current value is 500 mA, about 50% of the surfactant can be removed.

However, as shown in FIG. 4, it has been seen that in the treatment of the anionic surfactant, when the value of the current to be applied to the electrodes 6, 7 is set to a value larger than 500 mA, the removal ratio lowers. That is, in the treatment of the anionic surfactant, the positive potential is applied to the electrode 6, the surfactant collection material 9 is charged with the positive potential, and the surfactant collection material 9 collects the anionic surfactant. However, in this case, the for-treatment water around the surfactant collection material 9 charged with the positive potential is oxidized, a hydroxide ion discharges power to generate oxygen, and the water turns to acidic water. Therefore, when a voltage is applied to the electrodes 6, 7 which a current value larger than 500 mA, a large amount of oxygen having a high oxidation power is generated to corrode the surfactant collection material 9. Therefore, it is supposed that the removal ratio lowers. To solve the problem, in the treatment of the anionic surfactant, the value of the current to be supplied to the electrodes 6, 7 is controlled into 500 mA or less. In consequence, the corrosion of the surfactant collection material can be inhibited, and the anionic surfactant can stably be removed.

Next, the treatment time in the ion removal device S was varied to check the removal ratio of the cationic surfactant in the for-treatment water. FIG. 5 shows the removal ratio of the cationic surfactant in the for-treatment water in a case where voltages were applied to the electrodes 6, 7 of the ion removal device S of the present embodiment so as to obtain constant currents of 60 mA, 150 mA and 500 mA, respectively and the treatment time was varied. In FIG. 5, the ordinate indicates the removal ratio of total organic carbon (TOC) in the for-treatment water as the standard of the removal ratio of the surfactant, and the abscissa indicates the treatment time. As shown by the rhombic plot of FIG. 5, when the value of the current flowing through the electrodes 6, 7 was 60 mA, that is, the lowest value, the removal ratio was 20% or less in treatment time of 20 minutes, and about 30% in treatment time of 40 minutes. When the for-treatment water was subjected to a circulation treatment, the removal ratio was about 60%. Moreover, as shown by a square plot, it has been seen that when the current value is set to 150 mA, about 80% of the surfactant can be removed in treatment time of 40 minutes or more. Moreover, it has been seen that in a case where the current value further increases and is set to 500 mA (the triangle plot of FIG. 5), when the for-treatment water is circulated through the ion removal device S for 40 minutes or more, about 80% of the surfactant can be removed in the same manner as in a case where the voltage is applied to the electrodes 6, 7 so as to obtain a constant current of 150 mA.

From the above result, when the surfactant is removed from the for-treatment water in the ion removal device S of the present embodiment, the voltage is applied to the electrodes 6, 7 with a constant current of 150 mA, and the for-treatment water is circulated through the ion removal device S for 40 minutes or more, for example, 60 minutes in the present embodiment. However, the collection ratio of the surfactant depends on the concentration and the amount of the surfactant and the surface area of the surfactant collection material 9. Therefore, the current value and the circulation time are not limited to those in this example.

Moreover, as shown in FIG. 4, when the voltage is applied to the electrodes 6, 7 with a constant current of 150 mA, the scales can hardly be removed from the for-treatment water. The removal ratio of the scales increases in proportion to the increase of the current value. It has been seen that when the current value is set to a high value of 1500 mA as shown in FIG. 4, 64% of the scales can be removed from the for-treatment water.

As shown in FIG. 4, in both a cationic surfactant removal treatment and a scale removal treatment, the negative potential is applied to the first electrode 6, and the positive potential is applied to the second electrode 7, but it has been seen that the values of the currents removable in both the treatments are largely different from each other. That is, it has been seen that in a case where the cationic surfactant is removed, even when the current value is comparatively small (e.g., 150 mA described above), the surfactant can sufficiently be removed from the for-treatment water. However, in the case of the scale removal, when the current value is about 150 mA, the scales cannot sufficiently be removed from the for-treatment water. When the current value is as large as 1500 mA, the scales can be removed from the for-treatment water to a certain degree.

Therefore, when the scales are removed from the for-treatment water by the ion removal device S of the present embodiment, the voltage is applied to the electrodes 6, 7 with a large current value, for example, a current value of 1500 mA or more (a constant current of 1500 mA in the present embodiment). Moreover, the for-treatment water is circulated through the ion removal device S for 60 minutes in the same manner as in the above surfactant removal treatments.
(1) Anionic surfactant removal treatment step
   Next, an operation of the washing machine W of the present embodiment having the above constitution will be described. First, a case where the anionic surfactant is removed from the for-treatment water will be described. First, a washing target and a predetermined amount of a detergent (in this case, the detergent for use is a detergent including the anionic surfactant) corresponding to the amount of the washing target are introduced into the storage chamber 105 of the inner drum 102 from the opening/closing door 103. Then, the opening/closing door 103 is closed. When a power switch and the selection switch SW1 are selected from the above-mentioned operation switches and a start switch is operated, the control unit C starts the washing operation.

In consequence, the water feed valve 112V is opened to open the water feed passage 112. In this case, water is fed from the water feed source 107 into the storage chamber 105 of the inner drum 102 in the outer drum. It is to be noted that at this time, the waste water valve 113V of the waste water passage 113 is closed.

Subsequently, when the predetermined amount of the water is received in the storage chamber 105 of the inner drum 102, the control unit C closes the water feed valve 112V to block the water feed passage 112. In consequence, the feed of the water from the water feed source 107 is stopped.

Next, the control unit C energizes and starts up the driving motor 108, and rotates the shaft 109. In consequence, the inner drum 102 attached to the shaft 109 starts rotating in the outer drum to start the cleaning step.

In this cleaning step, the detergent including the anionic surfactant is added to the water (hereinafter referred to as the cleaning water) received in the storage chamber 105 as described above, whereby the surface tension of the cleaning water is decreased by the surfactant, and the cleaning water penetrates gaps among the fibers of washing targets such as clothes. Then, dirt components attached to the fibers are surrounded by the surfactant, and the dirt components are taken into the cleaning water. The dirt components attached to the hydrophobic group of the surfactant and taken into the cleaning water are surrounded by surfactant molecules and solubilized, and hence do not attach to the fibers again. Moreover, cations such as sodium ions derived from sweat attached to the clothes or the like are eluted in the cleaning water.

With an elapse of a predetermined time after the start of the cleaning step, the control unit C stops the driving motor 108, and opens the waste water valve 113V of the waste water passage 113. In consequence, the cleaning water in the storage chamber 105 of the inner drum 102 (i.e., the cleaning water in the outer drum) is discharged into the storage tank 110 via the waste water passage 113. At this time, the circulation valve 115V of the circulation passage 115 connected to the ion removal device S and the external waste water valve 114V connected to the external waste water passage 114 derived outwards are closed.

Subsequently, when the cleaning water in the storage chamber 105 of the inner drum 102 is discharged into the storage tank 110, the control unit C shifts from the cleaning step to a dewatering step. In this dewatering step, while maintaining the opened state of the waste water valve 113V of the waste water passage 113 opened at the end of the cleaning step, the control unit C executes this dewatering for a predetermined time. Afterward, the control unit closes the waste water valve 113V of the waste water passage 113, and ends the dewatering step. It is to be noted that in the washing machine W of the present embodiment, in the subsequent stage of this dewatering step or after the end of the dewatering step, the control unit C executes the following surfactant removal treatment step.

In this surfactant removal treatment step, the control unit C opens the circulation valve 115V of the circulation passage 115, and starts the operation of the pump P. In consequence, the cleaning water in the storage tank 110 (hereinafter referred to as the for-treatment water in this step) is fed from the outlet 110A through the circulation passage 115, the circulation valve 115V and the inflow port 2 of the ion removal device S to the electrolysis chamber 5 in the treatment tank 1. It is to be noted that the external waste water valve 114V remains to be closed.

When the for-treatment water is fed from the inflow port 2 to the electrolysis chamber 5 in the treatment tank 1, the first electrode 6, the surfactant collection material 9, the scale collection material 8 and the second electrode 7 in the electrolysis chamber 5 are immersed in the for-treatment water. Then, the for-treatment water fed to the electrolysis chamber 5 sequentially passes through the first electrode 6, the surfactant collection material 9, the scale collection material 8 and the second electrode 7, and is finally discharged from the circulation passage 116 connected to the outflow port 3 to the outside of the ion removal device S.

Moreover, simultaneously with the opening of the circulation valve 115V and the start of the operation of the pump P, the control unit C applies the positive potential to the first electrode 6 on the upstream side in the flow path of the for-treatment water of the ion removal device S, and applies the negative potential to the second electrode 7 on the downstream side. In consequence, the surfactant collection material 9 is charged with the same positive potential as that of the first electrode 6. At this time, the control unit C applies the voltage with the current value smaller than the value of the current flowing through the electrodes 6, 7 in a scale removal treatment step described later. In the present embodiment, the control unit C applies the voltage to the electrodes 6, 7 so as to obtain a constant current of 150 mA as described above.

When the positive potential is applied to the first electrode 6 and the surfactant collection material 9 and the negative potential is applied to the second electrode 7 as described above, the first electrode 6 and the surfactant collection material 9 on the upstream side in the flow path of the for-treatment water constitute the anode, and the second electrode 7 on the downstream side constitutes the cathode. Here, the detergent including the anionic surfactant is used in the present embodiment as described above. That is, the surfactant included in the detergent is charged with the negative potential. Therefore, the surfactant is attracted by the surfactant collection material 9 charged with the positive potential. Moreover, the surfactant including the dirt components surrounded by the surfactant is also attracted by the surfactant collection material 9. Therefore, the surfactant and the dirt components are positively and effectively adsorbed electrostatically or secured to the surfactant collection material 9.

Furthermore, when the voltage is applied to the electrodes 6, 7 as described above, the electrolysis of the for-treatment water occurs. That is, when the electrodes 6, 7 energize the for-treatment water in the electrolysis chamber 5, the first electrode 6 and the surfactant collection material 9 constituting the anode cause the following reaction:

2H₂O → 4H⁺+O₂+4e⁻.

The second electrode 7 constituting the cathode causes the following reaction:

4H⁺+4e⁻+(4OH⁻) → 2H₂+(4OH⁻).

Simultaneously, a chloride ion included in the for-treatment water reacts as follows:

2Cl⁻ → Cl₂+2e⁻.

Furthermore, this Cl₂ reacts with water as follows:

Cl₂+H₂O → HClO+HCl.

In this constitution, when the electrodes 6, 7 are energized, hypochlorous acid (HClO) is generated, and HClO can decompose the surfactant. Furthermore, organic substances such as the dirt components in the for-treatment water can be decomposed by hypochlorous acid. It is to be noted that in the present embodiment, the electrodes 6, 7 are energized to generate hypochlorous acid (HClO), but hypochlorous acid is not restrictive as long as electrolytic water including active oxygen seeds is generated by an electrolysis treatment. For example, even when the electrolysis treatment is performed to generate ozone, the surfactant, the detergent, the dirt components and the like can be decomposed.

Then, as described above, the for-treatment water from which the anionic surfactant, the detergent and the dirt components have been removed by the ion removal device S as described above passes from the circulation passage 116 through the pump P and again returns into the storage tank 110. Then, the water enters the circulation passage 115 from the outlet 110A of the storage tank 110, and is fed from the inflow port 2 of the ion removal device S to the electrolysis chamber 5 in the treatment tank 1 via the circulation valve 115V. This cycle is repeated. In consequence, owing to the adsorption effect of the surfactant collection material 9 and the decomposition effect of hypochlorous acid generated by the electrolysis, the surfactant, the detergent, the scale components and the like are gradually removed from the for-treatment water.

When the above surfactant removal treatment step is executed for a predetermined time (e.g., 60 minutes in the present embodiment), the control unit C closes the circulation valve 115V of the circulation passage 115, and then stops the pump P of the circulation passage 116 to end the surfactant removal treatment step. It is to be noted that the control unit C opens the external waste water valve 114 to discharge the for-treatment water from which the surfactant has been removed in the surfactant removal treatment step, from the washing machine W through the outlet 110B of the storage tank 110 and the external waste water passage 114. It is to be noted that the for-treatment water treated in the surfactant removal treatment step does not include any surfactant or dirt components, and can hence be reused in the next cleaning and rinsing and the like. In this case, for example, as shown by a broken line in FIG. 2, the storage tank 110 is connected to the water feed passage 112 via a pipe 120, and a pump P2 for pumping up the for-treatment water from the storage tank 110 is attached to this pipe 120. During the water feed in the cleaning step and the rinse step of the washing operation, the pump P2 is operated to feed the for-treatment water from the storage tank 110 to the storage chamber 105 through the pipe 120 and the water feed passage 112. In this case, the amount of the water to be fed from the water feed source 107 can remarkably be decreased, and the water can efficiently be saved.

On the other hand, in the washing machine W of the present embodiment, in the subsequent stage of this surfactant removal treatment step or after the end of the surfactant removal treatment step, the control unit C execute the following rinse step.

In this rinse step, first the water feed valve 112V is opened to open the water feed passage 112. In consequence, the water is fed from the water feed source 107 to the storage chamber 105 of the inner drum 102 in the outer drum. At this time, the waste water valve 113V of the waste water passage 113 is closed. When the predetermined amount of the water is fed into the storage chamber 105 of the inner drum 102, the control unit C closes the water feed valve 112V to block the water feed passage 112. In consequence, the feed of the water from the water feed source 107 is stopped.

Subsequently, when the rotating operation of the driving motor 108 is repeated for a predetermined time to perform the rinse, the control unit C stops the driving motor 108 to opens the waste water valve 113V of the waste water passage 113. In consequence, the rinse water is discharged from the storage chamber 105 (in the outer drum) to the storage tank 110 through the waste water passage 113. At this time, the circulation valve 115V of the circulation passage 115 connected to the ion removal device S and the external waste water valve 114V connected to the external waste water passage 114 derived outwards are closed.

Subsequently, when the rinse water of the storage chamber 105 (in the outer drum) is discharged into the storage tank 110, the control unit C shifts from the rinse step to the dewatering step. In the dewatering step, while maintaining the opened state of the waste water valve 113V of the waste water passage 113 opened at the end of the rinse step, the control unit C executes this dewatering for a predetermined time. Afterward, the control unit closes the waste water valve 113V of the waste water passage 113, and ends the dewatering step. It is to be noted that in the washing machine W of the present embodiment, in the subsequent stage of this dewatering step or after the end of the dewatering step, the control unit C executes the surfactant removal treatment step in the same manner as described above. It is to be noted that the operation of the surfactant removal treatment step is the same as the above operation, and hence the description thereof is omitted here.

(2) Cationic surfactant removal treatment step
   Next, a case where the only cationic surfactant is removed will be described. First, the washing target and the predetermined amount of the detergent (in this case, the detergent for use is a detergent including the cationic surfactant) corresponding to the amount of the washing target are introduced into the storage chamber 105 of the inner drum 102 from the opening/closing door 103. Then, the opening/closing door 103 is closed. When the power switch and the selection switch SW2 are selected from the above-mentioned operation switches and the start switch is operated, the control unit C starts the washing operation.

It is to be noted that the operation of the cleaning step, the dewatering step and the rinse step of the washing operation is similar to that described above in (1), and hence the description thereof is omitted here. The only cationic surfactant removal treatment step different from the above steps will be described.

That is, the control unit C opens the circulation valve 115V of the circulation passage 115, and starts the operation of the pump P. In consequence, the cleaning water in the storage tank 110 (hereinafter referred to as the for-treatment water in this step) is fed from the outlet 110A through the circulation passage 115, the circulation valve 115V and the inflow port 2 of the ion removal device S to the electrolysis chamber 5 in the treatment tank 1. It is to be noted that the external waste water valve 114V remains to be closed.

When the for-treatment water is fed from the inflow port 2 to the electrolysis chamber 5 in the treatment tank 1, the first electrode 6, the surfactant collection material 9, the scale collection material 8 and the second electrode 7 in the electrolysis chamber 5 are immersed into the for-treatment water. Then, the for-treatment water fed to the electrolysis chamber 5 sequentially passes through the first electrode 6, the surfactant collection material 9, the scale collection material 8 and the second electrode 7, and is finally discharged from the circulation passage 116 connected to the outflow port 3 to the outside of the ion removal device S.

Moreover, simultaneously with the opening of the circulation valve 115V and the start of the operation of the pump P, the control unit C applies the negative potential to the first electrode 6 on the upstream side in the flow path of the for-treatment water of the ion removal device S, and applies the positive potential to the second electrode 7 on the downstream side. In consequence, the surfactant collection material 9 is charged with the same negative potential as that of the first electrode 6. At this time, the control unit C applies the voltage with the constant current value smaller than the value of the current flowing through the electrodes 6, 7 in the scale removal treatment step described later. In the present embodiment, the control unit C applies the voltage to the electrodes 6, 7 so as to obtain a constant current of 150 mA as described above in the anionic surfactant removal treatment step (1).

When the negative potential is applied to the first electrode 6 and the surfactant collection material 9 and the positive potential is applied to the second electrode 7 as described above, the first electrode 6 and the surfactant collection material 9 on the upstream side in the flow path of the for-treatment water constitute the cathode, and the second electrode 7 on the downstream side constitutes the anode. Here, the detergent including the cationic surfactant is used in the present embodiment as described above. That is, the surfactant included in the detergent is charged with the positive potential. Therefore, the surfactant is attracted by the surfactant collection material 9 charged with the negative potential. Moreover, the surfactant including the dirt components surrounded by the surfactant is also attracted by the surfactant collection material 9. Therefore, the surfactant and the dirt components are positively and effectively adsorbed electrostatically or secured to the surfactant collection material 9.

Furthermore, when the electrodes 6, 7 energize the for-treatment water in the electrolysis chamber 5 as described above, the first electrode 6 and the surfactant collection material 9 constituting the cathode (in particular, the surface of the surfactant collection material 9 on the second electrode 7 side) cause the following reaction:

4H⁺+4e⁻+(4OH⁻) → 2H₂+(4OH⁻).

Simultaneously, the chloride ion included in the for-treatment water reacts as follows:

2Cl⁻ → Cl₂+2e⁻.

Furthermore, this Cl₂ reacts with water as follows:

Cl₂+H₂O → HClO+HCl.

Moreover, the second electrode 7 constituting the anode causes the following reaction:

2H₂O → 4H⁺+O₂+4e⁻.

In this case, when the electrodes 6, 7 are energized, hypochlorous acid (HClO) is generated, and HClO can decompose the organic substances such as the dirt components in the for-treatment water.

Then, as described above, the for-treatment water from which the cationic surfactant, the detergent and the dirt components have been removed by the ion removal device S as described above passes from the circulation passage 116 through the pump P and again returns into the storage tank 110. Then, the water enters the circulation passage 115 from the outlet 110A of the storage tank 110, and is fed from the inflow port 2 of the ion removal device S to the electrolysis chamber 5 in the treatment tank 1 via the circulation valve 115V. This cycle is repeated. In consequence, owing to the adsorption effect of the surfactant collection material 9 and the decomposition effect of hypochlorous acid generated by the electrolysis, the surfactant, the detergent, the dirt components and the like are gradually removed.

When the above surfactant removal treatment step is executed for a predetermined time (e.g., 60 minutes in the present embodiment), the control unit C closes the circulation valve 115V of the circulation passage 115, and then stops the pump P of the circulation passage 116 to end the surfactant removal treatment step. It is to be noted that the control unit C opens the external waste water valve 114V to discharge the for-treatment water from which the surfactant has been removed in the surfactant removal treatment step, from the washing machine W through the outlet 110B of the storage tank 110 and the external waste water passage 114. It is to be noted that the for-treatment water treated in the surfactant removal treatment step does not include any surfactant or dirt components, and can hence be reused in the next cleaning and rinsing and the like. In this case, for example, as shown by the broken line in FIG. 2, the storage tank 110 is connected to the water feed passage 112 via the pipe 120, and the pump P2 for pumping up the for-treatment water from the storage tank 110 is attached to this pipe 120. During the water feed in the cleaning step and the rinse step of the washing operation, the pump P2 is operated to feed the for-treatment water from the storage tank 110 to the storage chamber 105 through the pipe 120 and the water feed passage 112. In this case, the amount of the water to be fed from the water feed source 107 can remarkably be decreased, and the water can efficiently be saved.

(3) Scale removal treatment step
   Next, a case where the scales are removed from the for-treatment water will be described. First, the washing target and the predetermined amount of the detergent corresponding to the amount of the washing target are introduced into the storage chamber 105 of the inner drum 102 from the opening/closing door 103. Then, the opening/closing door 103 is closed. When the power switch and the selection switch SW3 are selected from the above-mentioned operation switches and the start switch is operated, the control unit C starts the washing operation.

It is to be noted that the operation of the cleaning step, the dewatering step and the rinse step of the washing operation is similar to that described above in (1), and hence the description thereof is omitted here. The only scale removal treatment step different from the above steps will be described.

That is, the control unit C opens the circulation valve 115V of the circulation passage 115, and starts the operation of the pump P. In consequence, the cleaning water in the storage tank 110 (hereinafter referred to as the for-treatment water in this step) is fed from the outlet 110A through the circulation passage 115, the circulation valve 115V and the inflow port 2 of the ion removal device S to the electrolysis chamber 5 in the treatment tank 1. It is to be noted that the external waste water valve 114V remains to be closed.

When the for-treatment water is fed from the inflow port 2 to the electrolysis chamber 5 in the treatment tank 1, the first electrode 6, the surfactant collection material 9, the scale collection material 8 and the second electrode 7 in the electrolysis chamber 5 are immersed into the for-treatment water. Then, the for-treatment water fed to the electrolysis chamber 5 sequentially passes through the first electrode 6, the surfactant collection material 9, the scale collection material 8 and the second electrode 7, and is finally discharged from the circulation passage 116 connected to the outflow port 3 to the outside of the ion removal device S.

Moreover, simultaneously with the opening of the circulation valve 115V and the start of the operation of the pump P, the control unit C applies the negative potential to the first electrode 6 on the upstream side in the flow path of the for-treatment water of the ion removal device S, and applies the positive potential to the second electrode 7 on the downstream side. In consequence, the surfactant collection material 9 is charged with the same negative potential as that of the first electrode 6. At this time, the control unit C applies the voltage with the constant current value larger than the value of the current flowing through the electrodes 6, 7 in the above surfactant removal treatment step. In the present embodiment, the control unit C applies the voltage to the electrodes 6, 7 so as to obtain a constant current of 1500 milliamperes (mA).

In consequence, the first electrode 6 on the upstream side in the flow path of the for-treatment water constitutes the cathode, and the second electrode 7 on the downstream side constitutes the anode. That is, when the electrodes 6, 7 energize the for-treatment water in the electrolysis chamber 5, the first electrode 6 and the surfactant collection material 9 constituting the cathode (in particular, the surface of the surfactant collection material 9 on the second electrode 7 side) cause the following reaction:

4H⁺+4e⁻+(4OH⁻) → 2H₂+(4OH⁻).

The second electrode 7 constituting the anode causes the following reaction:

2H₂O → 4H⁺+O₂+4e⁻.

As described above, on the surface of the surfactant collection material 9 constituting the cathode on the side of the second electrode 7 constituting the anode (i.e., the upper surface of the surfactant collection material 9), the hydroxide ion (OH⁻) is generated. Since the hydroxide ion is a very strong base, the periphery of the upper surface of the surfactant collection material 9 locally becomes alkaline. In consequence, the hard components in the for-treatment water react with the hydroxide ion, and turn to salt. Specifically, the ions of calcium, magnesium, potassium and silica included as main scale components in the for-treatment water are deposited as hardly soluble salt such as calcium hydroxide, calcium carbonate or magnesium hydroxide. It is to be noted that when the for-treatment water includes the ions of phosphorus, sulfur, zinc and the like, calcium sulfate, calcium sulfite, calcium phosphate, zinc phosphate, zinc hydroxide, basic zinc carbonate or the like is sometimes deposited as the salt. It is to be noted that a part of the ions of calcium, magnesium, potassium, silica and the like constituting the scale components is directly deposited on the upper surface of the surfactant collection material 9 by an electrocrystallizing function.

Then, the deposited scales are trapped and collected by the scale collection material 8 on the downstream side of the surfactant collection material 9 in the flow path. That is, the scales deposited on the upper surface of the surfactant collection material 9 flow to the scale collection material 8 brought into contact with the upper surface of the surfactant collection material 9 along the flow of the for-treatment water to attach to the surface of the scale collection material 8 on a surfactant collection material 9 side. The scales attach to the scale collection material 8 so as to grow from the surface over to the scale collection material 8 side (i.e., the second electrode 7 side) on the downstream side in the flow path.

Thus, the first electrode 6, the surfactant collection material 9, the scale collection material 8 and the second electrode 7 are integrated, and the scale collection material 8 is installed between the first electrode 6 and the surfactant collection material 9 charged with the same potential as that of the first electrode 6, and the second electrode 7. In this constitution, when the for-treatment water is circulated from the first electrode 6 and the surfactant collection material 9 constituting the cathode to the second electrode 7 constituting the anode, whereby the scales deposited on the surface (the upper surface) of the surfactant collection material 9 on the second electrode 7 side can efficiently be collected by the scale collection material 8.

Furthermore, the scales attached to the scale collection material 8 are seed crystals. That is, the scale attached to the scale collection material 8 is a nucleus, and the scale passing through the scale collectior material 8 later attaches to the nucleus and grows, so that the collection efficiency can further be improved.

In addition, as described above, each of the electrodes 6, 7, the surfactant collection material 9 and the scale collection material 8 has a water-passing structure, and the scale collection material 8 is made of an insulator. While circulating the for-treatment water without any trouble, the scales can be collected by the scale collection material 8.

Moreover, the scale collection material 8 is installed between the conductive surfactant collection material 9 energized by the first electrode 6 and the second electrode 7, and the for-treatment water is circulated from the surfactant collection material 9 side constituting the cathode to the second electrode 7 side constituting the anode. In consequence, it can be prevented as much as possible that the scales deposited on the upper surface of the surfactant collection material 9 attach to the surfactant collection material 9. In particular, when the flow rate of the for-treatment water is high, the scales once attached to the upper surface of the surfactant collection material 9 easily peel, and the peeled scales can be collected by the scale collection material 8 arranged on the downstream side of the surfactant collection material 9. In consequence, a disadvantage that the scales attach to the surfactant collection material 9 to cause short circuit between the electrodes 6 and 7 can be eliminated as much as possible

Then, the for-treatment water from which the scales have been removed by the ion removal device S as describd above flows from the circulation passage 116 through the pump P to return into the storage tank 110 again. Then, the water enters the circulation passage 115 from the outlet 110A of the storage tank 110, and is fed from the inflow port 2 of the ion removal device S to the electrolysis chamber 5 in the treatment tank 1 via the circulation valve 115V to remove the scales therefrom as described above. This cycle is repeated. It is to be noted that in the scale removal treatment step, the cationic surfactant can also be removed. That is, in a case where the detergent including the cationic surfactant is used as the detergent, when the scale removal treatment step is selected, the scale collection material 8 collects the scales, and the surfactant collection material 9 can collect the cationic surfactant. The cationic surfactant removal operation has been described above in detail in (2), and hence the description thereof is omitted.

When the scale removal treatment step is executed for a predetermined time (e.g., 60 minutes in the presert embodiment), the control unit C closes the circulation valve 115V of the circulation passage 115, and then stop the pump P of the circulation passage 116 to end the scale removal treatment step. It is to be noted that the contol unit C opens the external waste water valve 114V to discharge the for-treatment water from which the scales have been removed in the scale removal treatment step, from the washing machine W through the outlet 110B of the storage tank 110 and the external waste water passage 114.. It is to be noted that the for-treatment water treated in the scale removal treatment step can be reused in the next cleaning and rinsing and the like. In this case, as shown by the broken line in FIG. 2, the storage tank 110 is connected to the water feed passage 112 via the pipe 120, and the pump P2 for pumping up the for-treatment water from the storage tank 110 is attached to this pipe 120. During the water feed in the cleaning step and the rinse step of the washing operation, the pump P2 is operated to feed the for-treatment water from the storage tank 110 to the storage chamber 105 through the pipe 120 and the water feed passage 112. In this case, the amount of the water to be fed from the water feed source 107 can remarkably be decreased, and the water can efficiently be saved.

As described above, the for-treatment water from which the scales have been removed is used in the cleaning, the rinsing and the like, whereby metal soap formed by combining the surfactant and the scales decreases, ad hence the cleaning effect of the cleaning target can be improved.

Furthermore, when the detergent including the cationic surfactant is used, in the scale treatment step, the cationic surfactant is electrostatically adsorbd by or secured to the surfactant collection material 9 constituting the cathode. Therefore, the cationic surfactant can also positively and effectively be removed.

On the other hand, for example, when the detergent, including the anionic surfactant is used and both the scales and the anionic surfactant are to be removed the switches SW1, SW3 are selected, and the control unit C sequentially executes both the steps. For example, when the control unit C performs the surfactant removal treatment step described above in (1) for a predetermined time and then executes the scale removal treatment step described above in (3), both the scales and the anionic surfactant can be removed from the for-treatment water.

As described above in detail, the ion removal device S of the present invention can collect and remove ions of the scales, the surfactant and the like from the for-treatment water. In particular, according to the device of the present invention, in a single system, the electrolysis treatment is performed, and the scales and the surfactant can be collected, so that the miniaturization of the device and cost reduction can be achieved.

In particular, in the surfactant removal treatment, even when the current value is considerably smaller than the large value of the current flowing through the electrodes 6, 7 in the scale removal treatment step as described above, the for-treatment water is repeatedly circulated through the ion removal device S, whereby the surfactant can sufficiently be removed by the surfactant collection material 9. Therefore, when the voltage is applied to the electrodes 6, 7 with a small current value in the surfactant removal treatment step as in the present embodiment and the for-treatment water is repeatedly circulated through the ion removal device S, power consumption can remarkably be decreased.

It is to be noted that in the ion removal device S of the present embodiment, for example, the scale collection material 8 is allowed to carry the seed crystals. In this constitution, the scales further easily attach to the scale collection material 8 in the scale removal treatment step, and the collection efficiency can further be improved.

On the other hand, when a large amount of surfactant attaches to the surfactant collection material 9 or when a large amount of scales attach to the scale collection material 8, the circulation of the for-treatment water might be disturbed. Therefore, these materials need to be changed. In this case, first the power of the ion removal device S is turned off to stop the energization of the electrodes 6, 7. Afterward, as described above, the upper surface or the lower surface of the treatment tank 1 is removed to disassemble the treatment tank 1, and the integrated first electrode 6, the surfactant collection material 9, the scale collection material 8 and the second electrode 7 are extracted from the treatment tank 1. Afterward, the second electrode 7 attached to the upper surface of the scale collection material 8 and the first electrode 6 attached to the lower surface of the surfactant collection material 9 are removed, and further the surfactant collection material 9 and the scale collection material 8 are separated.

Afterward, a new scale collection material 8 and a new surfactant collection material 9, or the cleaned surfactant collection material 9 from which the surfactant has been removed and the scale collection material 8 from which the scales have been removed are assembled, the second electrode 7 is attached to the upper end face (the upper end face of the scale collection material 8), and the first electrode 6 is attached to the lower end face (the lower end face of the surfactant collection material 9) to integrate the materials and the electrodes. Then, the materials and the electrodes are inserted into the treatment tank 1, and the removed one surface (the upper surface and the lower surface) is again attached with screws or the like. As described above, since the surfactant collection material 9 and the scale collection material 8 have a changeable structure, the surfactant collection material 9 to which the surfactant has attached and the scale collection material 8 to which the scales have attached can be changed.

### Embodiment 2

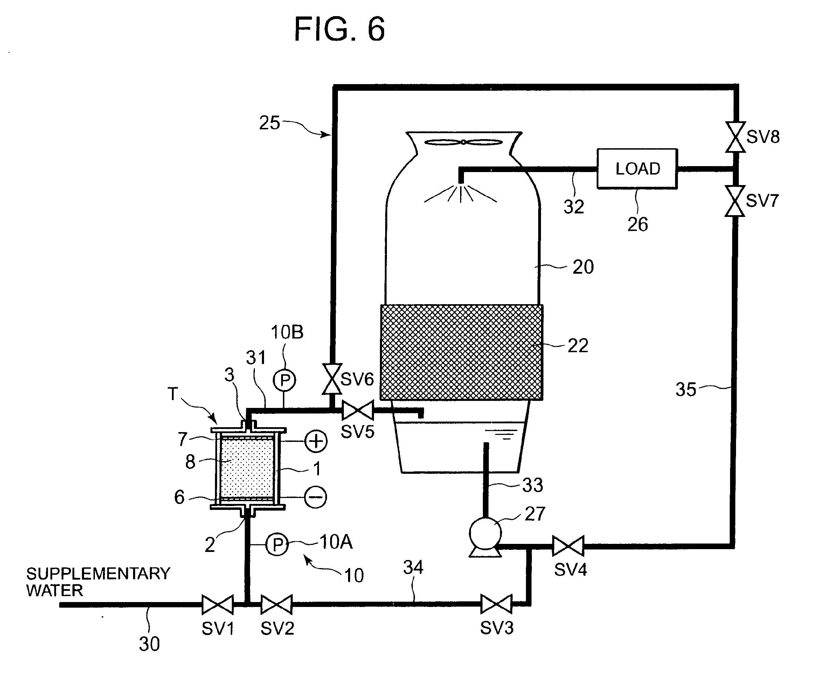

Next, another embodiment of the ion removal device according to the present invention will be described with reference to FIG. 6. FIG. 6 is a schematic explanatory diagram in a case where the ion removal device of the present invention is applied to a cooling tower 20 which cools a capacitor 22. When the cooling tower 20 is unused, scales are easily generated from water received in the cooling tower 20. Moreover, during use, water circulated through a circuit is agglomerated, and the scales are generated to easily attach to pipes or the surface (the thermally conductive surface) of the capacitor 22. Therefore, to remove the adverse influence of such generation of the scales, the ion removal device of the present invention is preferably used. It is to be noted that in FIG. 6, the components denoted with the same reference numerals as those of FIGS. 1 to 5 produce the same or similar effects or perform the same or similar functions, and hence the description thereof is omitted.

In FIG. 6, reference numeral 25 is a circuit through which cooling water flows. The circuit 25 is constituted by connecting an ion removal device T, load means 26, the cooling tower 20, a circulation pump 27 and the like via pipes, and a plurality of electromagnetic valves SV1 to SV8 are arranged in the middle portions of the pipes. That is, a water feed source of city water or the like is connected to one end of a pipe 30 to resupply water (supplementary water) into the circuit 25. One end of the pipe 30 is connected to the water feed source, and the other end of the pipe is connected to an inflow port 2 of the ion removal device T via the electromagnetic valve SV1. Moreover, a pipe 31 connected to an outflow port 3 of the ion removal device T is branched into two pipes, and one of the pipes is connected to the cooling tower 20 via the electromagnetic valve SV5 to open in a position above the water surface of the water received in the cooling tower 20 in the lower part of the cooling tower 20.

Then, the other branched pipe 31 is connected to the load means 26 via the electromagnetic valves SV6, SV8. This load means 26 imparts a load to water and reduces a pressure. The load means is provided on a rear side (a downstream side) to evaporate the water in the cooling tower 20. A pipe 32 connected to the outlet of this load means 26 is connected to the cooling tower 20 to open in the upper end of the cooling tower 20. Moreover, the bottom part of the cooling tower 20 is connected to a pipe 33. One end of the pipe 33 opens in the water received in the cooling tower 20, and the other end of the pipe exits from the cooling tower 20, and is connected to the inlet side of the circulation pump 27.

Moreover, one end of the pipe 34 having the other end thereof connected to the outlet side of the circulation pump 27 is connected to the downstream side of the electromagnetic valve SV1 of the pipe 30 sequentially through the electromagnetic valves SV3 and SV2 from the other end thereof connected to the outlet side of the circulation pump 27. Moreover, one end of a pipe 35 is connected to a position on the downstream side of the electromagnetic valve SV8 of the pipe 31 and the upstream side of the load means 26, and the other end of the pipe is connected to a position on the downstream side of the circulation pump 27 and the upstream side of the electromagnetic valve SV3 along the pipe 34. Moreover, one end side of the pipe 35 is connected to the electromagnetic valve SV7, and the other end side of the pipe is connected to the electromagnetic valve SV4. Moreover, in the cooling tower 20, the capacitor 22 is installed. This capacitor 22 is connected to a compressor (not shown), expansion means (not shown) and an evaporator (not shown) via pipes, to constitute, for example, the refrigerant cycle of an air conditioner.

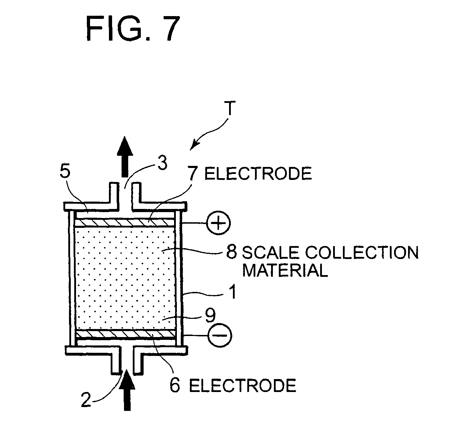

In the ion removal device T of the present embodiment, ion collection means is composed of an insulating scale collection material 8 capable of collecting scales from for-treatment water, and does not have the surfactant collection material 9 shown in the above first embodiment. That is, the ion removal device T is a scale removal device in which the ion collection means is made of the scale collection material 8 and which can collect the scales from the for-treatment water. Specifically, as shown in FIG. 7, the ion removal device T of the present embodiment includes a first electrode 6, a second electrode 7 and the scale collection material 8 as the ion collection means, and the scale collection material 8 is vertically held between the electrodes 6 and 7 to integrally constitute the device. In the present embodiment, the electrode 6 is detachably attached to the lower end of the scale collection material 8, the second electrode 7 is detachably attached to the upper end of the scale collection material, and the material and the electrodes are received in an electrolysis chamber 5 of a treatment tank 1.

Moreover, the scale collection material 8 of the present embodiment shows a color having a complementary color relation with the scales collected by the scale collection material 8. In general, since the scales collected by the scale collection material 8 of the present embodiment are white, the scale collection material 8 is black, green or the like so that the white scales become conspicuous. In consequence, the scales trapped by the scale collection material 8 can visually be observed.

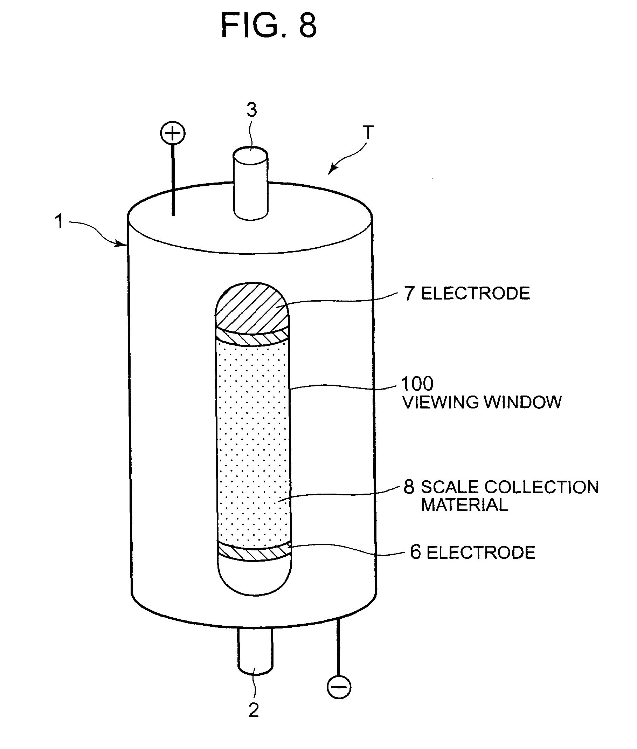

Furthermore, as shown in FIG. 8, the treatment tank 1 of the ion removal device T of the present embodiment is provided with a viewing window 100, and it is constituted that the scale collection material 8 received in the treatment tank 1 can visually be observed from the outside. Thus, the scale collection material 8 is provided with the color having the complementary color relation with the scales trapped by the scale collection material 8. Moreover, the viewing window 100 is provided so that the scale collection material 8 received in the treatment tank 1 can visually be observed from the outside, whereby a time to change the scale collection material 8 can visually be confirmed.

Furthermore, the circuit 25 of the present embodiment includes change notification means 10 for predicting the time to change the scale collection material 8 of the ion removal device T to notify a user. The change notification means 10 predicts the time to change the scale collection material 8 based on a difference between a hydraulic pressure on the inflow side of the for-treatment water and a hydraulic pressure on the outflow side of the water. The change notification means includes an inflow-side hydraulic pressure detection unit 10A which detects the pressure of the water flowing into the ion removal device T, an outflow-side hydraulic pressure detection unit 10B which detects the pressure of the water discharged from the ion removal device T, a control unit (not shown), change time notification means and the like.

In the present embodiment, the inflow-side hydraulic pressure detection unit 10A is installed along the pipe 30 connected to the inflow port 2 of the ion removal device T, and the outflow-side hydraulic pressure detection unit 10B is installed along the pipe 31 connected to the outflow port 3. These hydraulic pressure detection units 10A, 10B are connected to the control unit (not shown). Then, the control unit is constituted to operate the change time notification means (not shown), when a pressure difference between the hydraulic pressures detected by the hydraulic pressure detection units 10A and 10B reaches a predetermined pressure difference.

The pressure difference between the hydraulic pressures detected by the hydraulic pressure detection units 10A and 10B is usually the predetermined pressure difference or less. However, when the scales attach to the scale collection material 8 to disturb the flow of the for-treatment water, the difference is made between the hydraulic pressure on the inflow side and the hydraulic pressure on the outflow side. That is, since the inflow-side for-treatment water does not easily flow, the inflow-side hydraulic pressure detected by the inflow-side hydraulic pressure detection unit 10A rapidly lowers. In consequence, the pressure difference between the hydraulic pressures detected by the hydraulic pressure detection units 10A and 10B is the predetermined pressure difference or more. At this time, the control unit operates the change time notification means (constituted of an alarm, a warning display unit or the like) to notify the user that the time to change the scale collection material 8 is coming close.

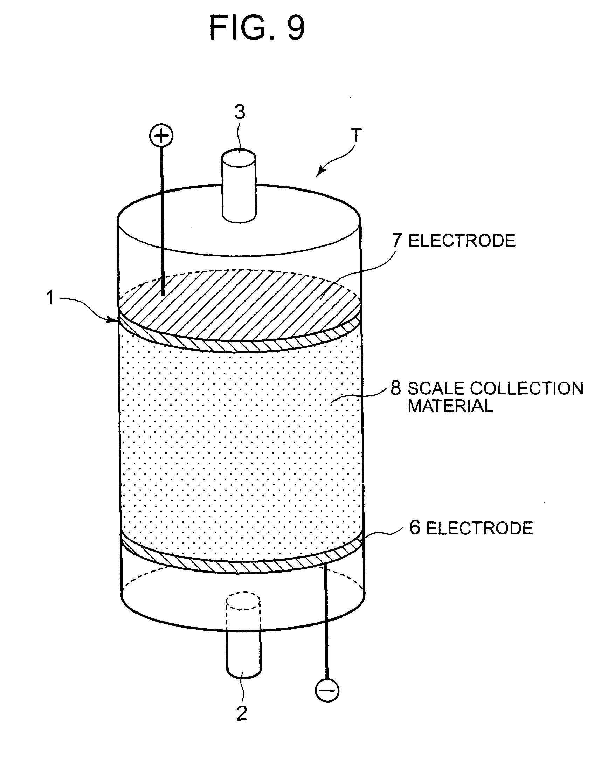

Thus, when the time to change the scale collection material 8 is predicted based on the difference between the hydraulic pressure on the inflow side and the hydraulic pressure on the outflow side of the for-treatment water, the above effects of the color of the scale collection material 8 and the viewing window 100 are obtained, and additionally the time to change the scale collection material 8 can more securely be grasped. The scale collection material can appropriately be changed. In consequence, the scales can be collected in a constantly satisfactory state. It is to be noted that the treatment tank 1 provided with the viewing window 100 as shown in FIG. 8 is not restrictive. For example, as shown in FIG. 9, the whole treatment tank 1 may be composed of a transparent tank. Even in this case, the scale collection material 8 received in the treatment tank 1 can visually be observed from the outside, so that the time to change the scale collection material 8 can visually be confirmed.

Furthermore, the above structure of the change notification means 10 is not restrictive, as long as the difference between the hydraulic pressure on the inflow side and the hydraulic pressure on the outflow side of the scale collection material 8 of the ion removal device T can be detected to predict the time to change the scale collection material 8. Moreover, in the present embodiment, the inflow-side hydraulic pressure detection unit 10A is installed on the pipe 30, and the outflow-side hydraulic pressure detection unit 10B is installed on the pipe 31, but this is not restrictive, and the units may be provided in the ion removal device T. In this case, for example, the inflow-side hydraulic pressure detection unit 10A is arranged in a flow path between the inflow port 2 and the scale collection material 8, and the outflow-side hydraulic pressure detection unit 10B is arranged in a flow path between the scale collection material 8 and the outflow port 3, whereby the time to change the scale collection material 8 can be predicted based on the hydraulic pressure difference between the inflow side and the outflow side as described above.

Next, the water circulating operation of the above circuit constitution will be described. First, an operation of resupplying the water into the circuit during the water feed will be described. During the water feed, the electromagnetic valves SV1 and SV5 are opened, and the electromagnetic valves SV2 and SV6 are closed. In consequence, the water from the water source flows from the inflow port 2 to the ion removal device T via the electromagnetic valve SV1. Then, in this ion removal device T, the for-treatment water sequentially passes through the first electrode 6, the scale collection material 8 and the second electrode 7, and the for-treatment water from which the scale components have been removed enters the pipe 31 from the outflow port 3, and flows into the cooling tower 20 via the electromagnetic valve SV5. At this time, the water from the water feed source received in the cooling tower 20 is the for-treatment water which has passed through the ion removal device T and from which the scale components have been removed. Therefore, unlike a conventional example, a disadvantage that the scales are generated from the water received in the cooling tower 20 can be avoided as much as possible.

Next, the circulating operation of the water flowing through the cooling tower 20 will be described. First, there will be described a case where water is not circulated through the ion removal device T and the cooling tower 20 is operated. In this case, the electromagnetic valves SV4 and SV7 are opened, and the electromagnetic valves SV3 and SV8 are closed. Subsequently, when the circulation pump 27 is driven, the water received in the cooling tower 20 enters the pipe 33, and is sucked into the circulation pump 27. The water sucked into the circulation pump 27 is discharged to the pipe 35, and reaches the load means 26 through the electromagnetic valves SV4 and SV7. The pressure of the water is reduced by the load means 26, and then the water is discharged into the cooling tower 20 through the pipe 32. The water discharged into the cooling tower 20 absorbs heat from the capacitor 22 arranged so that heat exchange between the water and cooling tower 20 can be performed, to evaporate. On the other hand, a refrigerant flowing through the capacitor 22 performs heat exchange between the refrigerant and the water, and is thus cooled. Afterward, the water which has evaporated in the cooling tower 20 then repeats a cycle in which the water returns to a liquid, flows downward to the bottom part and is sucked into the circulation pump 27 of the pipe 33.

Next, there will be described a case where while circulating the water through the ion removal device T to remove the scale components, the cooling tower 20 is operated. In this case, the electromagnetic valves SV3, SV2, SV6 and SV8 are opened, and the electromagnetic valves SV1, SV4, SV5 and SV7 are closed. Subsequently, when the circulation pump 27 is driven, the water received in the cooling tower 20 enters the pipe 33, and is sucked into the circulation pump 27. The water sucked into the circulation pump 27 is discharged to the pipe 34, and sequentially passes through the electromagnetic valves SV3, SV2 and the ion removal device T. Then, the for-treatment water from which the scale components have been removed by the ion removal device T enters the pipe 31 from the outflow port 3, and reaches the load means 26 through the electromagnetic valves SV6 and SV8. Then, after reducing the pressure of the water, the water is discharged into the cooling tower 20 through the pipe 32. The water having the pressure reduced by the load means 26 and discharged to the cooling tower 20 absorbs the heat from the capacitor 22 arranged so that the heat exchange can be performed, to evaporate in the cooling tower 20. On the other hand, the refrigerant flowing through the capacitor 22 performs the heat exchange between the refrigerant and the water, and is thus cooled.

Afterward, the water which has evaporated in the cooling tower 20 then repeats a cycle in which the water returns to the liquid, flows downward to the bottom part and flows through the pipe 34. Thus, even during a circulating operation for cooling the capacitor 22 by the cooling tower 20, the water can be circulated through the ion removal device T to remove the scale components. In consequence, it is possible to prevent a disadvantage that the scales are generated from the water circulating through the cooling tower 20 to agglomerate. In particular, when the water circulated through the circuit 25 is supplied to the ion removal device T, it is possible to avoid in advance disadvantages that the scales attach to the inside of the piping (the pipes 30 to 35) to disturb the circulation of the water and that the scales attach to the surface (the thermally conductive surface) of the capacitor 22 to lower a heat exchange ability.

On the other hand, even during the stop of the cooling tower 20, the water received in the cooling tower 20 is supplied to the ion removal device T to remove the scale components from the water, whereby the generation of the scales from the water received in the cooling tower 20 can further be prevented. In this case, the electromagnetic valves SV3, SV2 and SV5 are opened, and the electromagnetic valves SV1, SV4 and SV6 are closed. Subsequently, when the circulation pump 27 is driven, the water received in the cooling tower 20 enters the pipe 33 and is sucked into the circulation pump 27. The water sucked into the circulation pump 27 sequentially passes the electromagnetic valves SV3, SV2 and the ion removal device T. Then, the for-treatment water from which the scale components have been removed by the ion removal device T enters the pipe 31 from the outflow port 3, flows into the cooling tower 20 via the electromagnetic valve SV5, and is received in the bottom part of the tower. Thus, even during the stop of the cooling tower 20, the circulation pump 27 can be driven to supply the water received in the cooling tower 20 to the ion removal device T, thereby removing the scale components. Embodiment 3

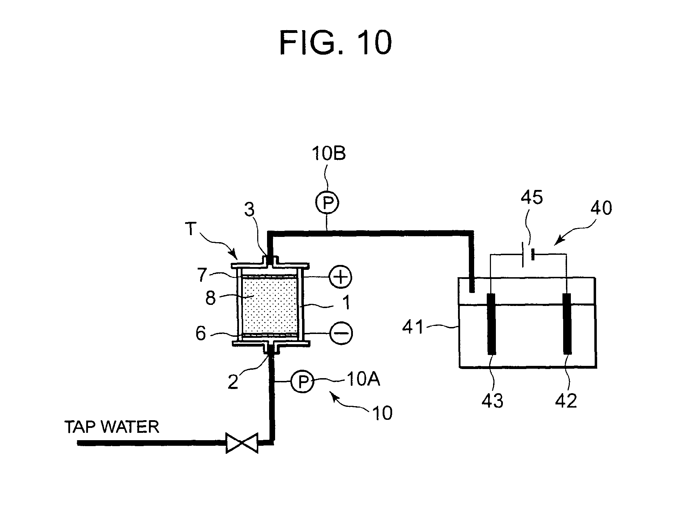

Next, still another embodiment of an ion removal device according to the present invention will be described with reference to FIG. 10. FIG. 10 is a schematic explanatory diagram showing a case where the ion removal device of the present invention is applied to an electrolytic water generation device which electrolyzes water to generate sterilized water such as hypochlorous acid water or acid water and electrolytic water such as alkali ion water. It is to be noted that an ion removal device T of FIG. 10 is a device having the same constitution as that of the ion removal device described with reference to FIG. 7. It is to be noted that in FIG. 10, the components denoted with the same reference numerals as those of FIGS. 1 to 9 produce the same or similar effects or perform the same or similar functions, and hence the description thereof is omitted.

In FIG. 10, reference numeral 40 is an electrolytic water generation device, and the electrolytic water generation device 40 includes an electrolysis tank 41, a pair of electrodes 42, 43 immersed into the electrolysis tank 41, and a power source 45 which energizes the electrodes 42, 43. The electrolytic water generation device 40 is similar to a conventional electrolytic water generation device, and hence specific description thereof is omitted in the present embodiment. That is, the electrodes 42, 43 are electrode plates each including a base material of, for example, titanium (Ti), and a membrane layer made of iridium (Ir) or platinum (Pt). The value of a current flowing through the electrodes 42, 43 is set to 20 milliamperes (mA)/square centimeter (cm²), to generate a predetermined floating residual chlorine concentration (e.g., 1 milligram (mg)/1 (liter)).

When the electrodes 42, 43 energize city water, the cathode electrode 42 causes the following reaction:

4H⁺+4e⁻+(4OH⁻) → 2H₂+(4OH⁻).

The anode electrode 43 causes the following reaction:

2H₂O → 4H⁺+O₂+4e⁻.

Simultaneously, a chloride ion included in water (the ion beforehand added to the city water) reacts as follows:

2Cl⁻ → Cl₂+2e⁻.

Furthermore, this Cl₂ reacts with water as follows:

Cl₂+H₂O → HClO+HCl.

In this constitution, when the electrodes 42, 43 are energized, the sterilized water including hypochlorous acid (HClO) having a large sterilization power can be generated.

Here, the water (the city water or the like) for use in the above electrolytic water generation device 40 includes hard components (calcium, magnesium, potassium, silica, etc.). When the city water is fed as it is to the electrolytic water generation device 40 to generate the electrolytic water, the hard components dissolved in the city water by electrolysis are deposited as scales and attach to the electrodes, thereby causing a disadvantage that the electrodes might be deteriorated or that an electrolysis treatment ability might be lowered.

Therefore, to eliminate the adverse influence of such scale generation, the scale components are removed by the ion removal device, and this water is fed to the electrolytic water generation device 40 and electrolyzed, whereby the generation of the scales in the electrolytic water generation device 40 can be prevented.

As described above, the ion removal device of the present invention can be applied to various devices using the for-treatment water, to eliminate the adverse influence of the scale generation.

It is to be noted that in the above embodiments, as the electrodes 6, 7 of the ion removal device, platinum is processed into mesh-like electrodes each having the whole disc shape, and the electrodes are water-passing electrodes and capable of circulating the for-treatment water are obtained. However, this is not restrictive. As the electrodes 6, 7, there may be used electrodes each made of a single material of carbon, titanium or stainless steel, or a conductor including one of platinum (Pt), carbon, titanium, stainless steel and other conductive materials. Moreover, there is not any special restriction on the shape of the electrodes 6, 7 as long as the electrodes have such water-passing structure that the for-treatment water can be circulated. The electrodes may be made of a porous material processed into a fibrous or punching-plate-like shape.

### Embodiment 4

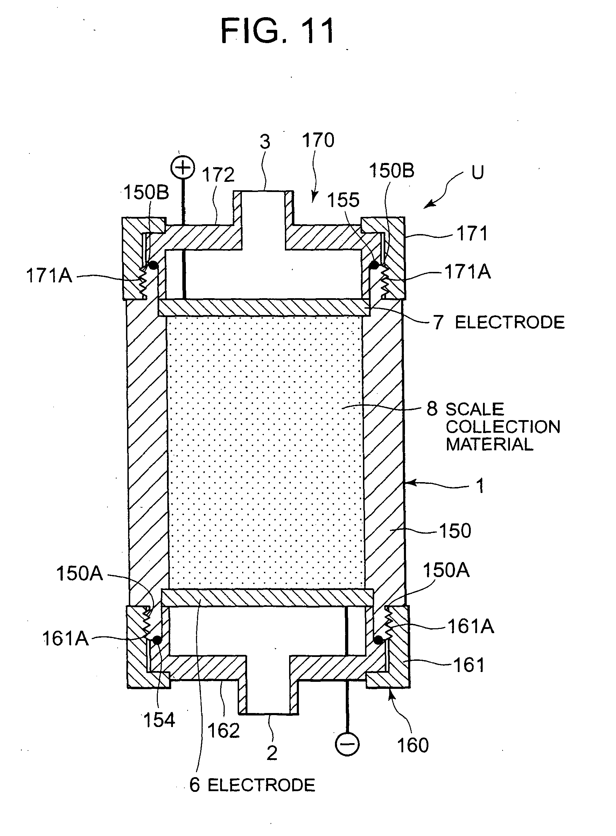

It is to be noted that the ion removal device of the above first embodiment has a constitution in which at least a part of the treatment tank 1 can be disassembled. Here, an example of a specific structure will be described. This embodiment will be described in accordance with a device in which ion collection means is made of an only scale collection material 8 as described above in the second embodiment. FIG. 11 is a vertical side view of an ion removal device U according to the present embodiment having a constitution in which the treatment tank 1 can be disassembled. As shown in FIG. 11, the treatment tank 1 of the ion removal device U according to the present embodiment is composed of a cylindrical main body 150, a lid member 160 which closes the lower-end opening of the main body and a lid member 170 which closes the upper-end opening of the main body. The outer peripheral surfaces of this cylindrical main body 150 in the vicinity of the upper and lower ends thereof are provided with screw threads 150A, 150B which engage with screw grooves 161A, 171A formed in the inner surfaces of outer shell portions 161, 171 of the lid members 160, 170.

The lid member 160 is constituted of the above outer shell portion 161 and an inner member 162 arranged on the inner side of the outer shell portion and having a lower end thereof provided with an inflow port 2. Moreover, the lid member 170 is constituted of the above outer shell portion 171 and an inner member 172 arranged on the inner side of the outer shell portion and having an upper end thereof provided with an outflow port 3. Moreover, the inner diameter of the center of the main body 150 is set to an inner diameter smaller than that of the upper or lower end. In consequence, the center and the upper and lower ends have a stepped shape. Then, this stepped portion and the inner members 162, 172 of the lid members 160, 170 hold electrodes 6, 7.

Specifically, to assemble the ion removal device U, first a scale collection material 8 is inserted into the main body 150 from the opening of the upper end or the lower end of the main body 150, the second electrode 7 is brought into contact with the upper surface of the material, and the first electrode 6 is brought into contact with the lower surface of the material. In this state, the inner member 172 is arranged in the upper edge of the main body 150 via an O-ring 155, the outer shell portion 171 is inserted from the upside, and the screw groove 171A of the outer shell portion 171 is engaged with the screw thread 150B formed in the upper end of the main body 150. Similarly, the inner member 162 is arranged in the lower edge of the main body 150 via an O-ring 154, the outer shell portion 161 is inserted from the downside, and the screw groove 161A of the outer shell portion 161 is engaged with the screw thread 150A formed in the lower end of the main body 150. In consequence, the ion removal device U can easily be assembled. Moreover, to disassemble the ion removal device U, the components are sequentially removed by a procedure reverse to that during the assembling, whereby the device can easily be disassembled. In consequence, the scale collection material 8 can easily be changed. In particular, the members are attached to the upper and lower ends of the main body 150 via the O-rings 154, 155, whereby the water tightness of the treatment tank 1 can be improved, and a disadvantage that for-treatment water leaks from the treatment tank 1 can be prevented. It is to be noted that the present invention is not limited to a screw-in type shape as in the structure of the ion removal device U of the present embodiment shown in FIG. 11. Even when the lid members have such a shape as to be fixed with screws, the members can be unscrewed to disassemble the ion removal device, and the ion collection means can be changed.

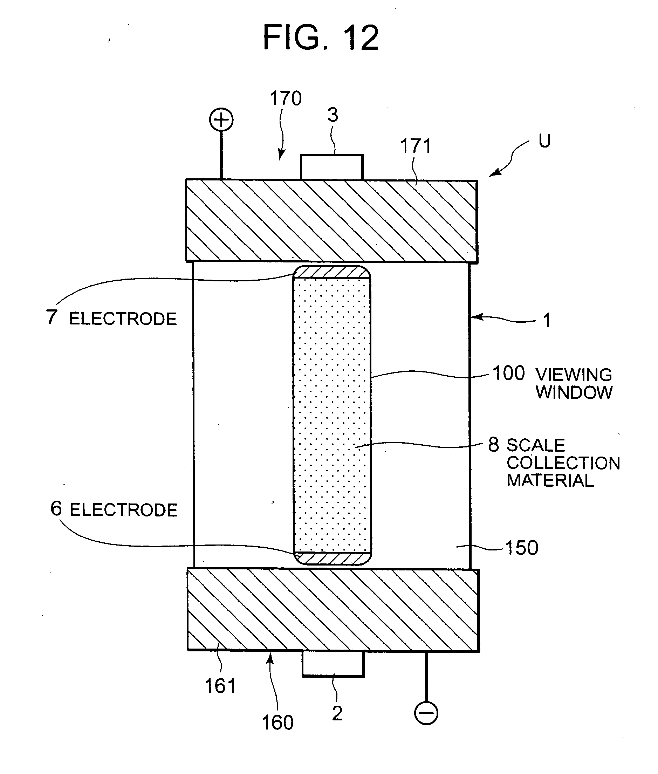

Furthermore, in the ion removal device U of the present embodiment, as shown in FIG. 12, the main body 150 may be provided with a viewing window 100, so that the scale collection material 8 can visually be observed from the outside in the same manner as in the above second embodiment. In particular, when the scale collection material 8 is formed in a color (e.g., a color such as black or green as in the above second embodiment so that white scales become conspicuous) having a complementary color relation with scales trapped by the scale collection material 8, the scales attached to the scale collection material 8 can easily visually be confirmed, and a time to change the material can be grasped. Embodiment 5

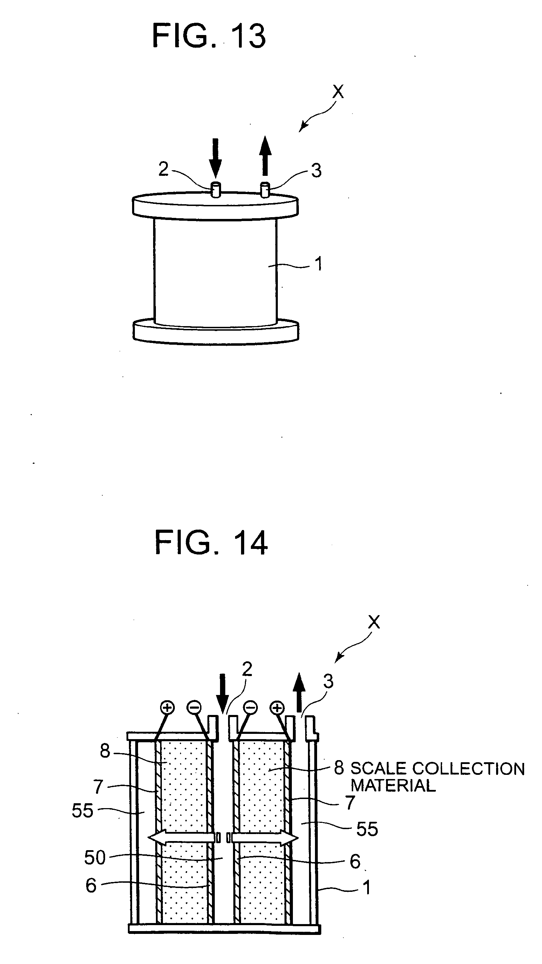

Next, FIG. 13 shows an appearance diagram of an ion removal device X according to a fifth embodiment, and FIG. 14 shows a schematic explanatory diagram of the ion removal device X of FIG. 13, respectively. It is to be noted that in FIGS. 13 and 14, the components denoted with the same reference numerals as those of FIGS. 1 to 12 produce similar effects or perform similar functions, and hence the description thereof is omitted. The ion removal device X of the present embodiment is composed of a treatment tank 1 having a vertically long cylindrical shape and provided with an inflow port 2 in the center of the upper surface along an axial center direction and an outflow port 3 on the outer peripheral side of the inflow port 2; electrodes 6, 7 concentrically arranged in this treatment tank 1; and a scale collection material 8 as ion collection means.

The electrode 6 has a cylindrical shape including a space portion 50 in the axial center direction, and the upper end of the space portion 50 communicates with the inflow port 2. The outer peripheral surface of the electrode 6 is provided with the scale collection material 8 which abuts on the electrode 6. This scale collection material 8 has a donut-like shape including, in the center thereof, a hole through which the electrode 6 is inserted, and is arranged so that the inner peripheral surface of the material abuts on the outer peripheral surface of the electrode 6 and so that the outer peripheral surface of the material abuts on the inner peripheral surface of the electrode 7. Then, the electrode 7 is arranged so as to cover the outer peripheral surface of the scale collection material 8. Moreover, in a state in which the electrode 7 is installed in the treatment tank 1, a predetermined space portion 55 is constituted between the outer peripheral surface of the electrode 7 and the inner surface of the treatment tank 1, and the outflow port 3 opens corresponding to the upper end of this space portion 55. That is, the ion removal device X of the present embodiment has a constitution in which for-treatment water is allowed to flow into the treatment tank 1 from the center, and this water sequentially passes through the electrode 6, the scale collection material 8 and the electrode 7, that is, the for-treatment water is supplied from the inside to the outside. The water is then discharged from the outflow port 3 formed in the upper end of the space portion 55 formed between the outer peripheral surface of the electrode 7 and the inner peripheral surface of the treatment tank 1.

These electrodes 6, 7 and the scale collection material 8 are integrated in the same manner as in the above embodiments, and can be removed from or inserted into the treatment tank 1. It is to be noted that the materials of the electrodes 6, 7 and the scale collection material 8 are similar to those described in detail in the above first embodiment, and hence the description thereof is omitted here.

Next, the operation of the ion removal device X according to the present embodiment having the above constitution will be described. First, when the power source of the ion removal device X is turned on, the energization of the electrodes 6, 7 is started. In consequence, the electrode 6 on the upstream side of the flow path the for-treatment water is a cathode, and the electrode 7 on a downstream side is an anode. That is, when the electrodes 6, 7 energize the for-treatment water in an electrolysis chamber 5, the electrode 6 as the cathode causes the following reaction:

4H⁺+4e⁻+(4OH⁻) → 2H₂+(4OH⁻).

The anode electrode causes the following reaction:

2H₂O → 4H⁺+O₂+4e⁻.

As described above, on the surface of the electrode 6 constituting the cathode on an anode side (i.e., the outer peripheral surface of the electrode 6), a hydroxide ion (OH⁻) is generated. Since the hydroxide ion is a very strong base, the periphery of the outer peripheral surface of the electrode 6 locally becomes alkaline. In consequence, hard components in the for-treatment water react with the hydroxide ion, and turn to salt. Specifically, the ions of calcium, magnesium, potassium and silica included as main scale components in the for-treatment water are deposited as hardly soluble salt such as calcium hydroxide, calcium carbonate or magnesium hydroxide. It is to be noted that when the for-treatment water includes the ions of phosphorus, sulfur, zinc and the like, calcium sulfate, calcium sulfite, calcium phosphate, zinc phosphate, zinc hydroxide, basic zinc carbonate or the like is sometimes deposited as the salt. It is to be noted that a part of the ions of calcium, magnesium, potassium, silica and the like constituting the scale components is directly deposited on the outer peripheral surface of the electrode 6 by an electrocrystallizing function.

Then, the scales (salts) deposited as described above are trapped and collected by the scale collection material 8 positioned on the downstream side of the electrode 6 in the flow path. That is, the scales deposited on the outer peripheral surface of the electrode 6 flow to the scale collection material 8 which abuts on the outer peripheral surface of the electrode 6 owing to the flow of the for-treatment water. The scales attach to the surface of the scale collection material 8 on an electrode 6 side (i.e., the inner peripheral surface of the scale collection material 8), and attach from the surface over to the outside of the scale collection material 8 (i.e., an electrode 7 side) so as to grow.

Thus, the electrode 6, the scale collection material 8 and the electrode 7 are integrated, the scale collection material 8 is provided between the electrodes 6 and 7, and the for-treatment water can be circulated from the electrode 6 on the cathode side to the electrode 7 on the anode side, so that the scale collection material 8 can efficiently collect the scales deposited on the surface of the electrode 6 on the electrode 7 side (the outer peripheral surface of the electrode 6).

Furthermore, the scales attached to the scale collection material 8 are seed crystals. That is, the scale attached to the scale collection material 8 is a nucleus, and the scale passing through the scale collection material 8 later attaches to the nucleus and grows, so that the collection efficiency can further be improved.

In addition, as described above, each of the electrodes 6, 7 and the scale collection material 8 has a water-passing structure, and the scale collection material 8 is made of an insulator. In consequence, while circulating the for-treatment water without any trouble, the scales can be collected by the scale collection material 8.

Moreover, the scale collection material 8 is installed between the electrodes 6 and 7, and the for-treatment water is circulated from the side of the electrode 6 constituting the cathode to the side of the electrode 7 constituting the anode. In consequence, it can be avoided as much as possible that the scales deposited on the outer peripheral surface of the electrode 6 attach to the electrode 6. In particular, when the flow rate of the for-treatment water is high, the scales once attached to the electrode 6 easily peel, and the peeled scales can be collected by the scale collection material 8 arranged on the downstream side of the electrode 6. In consequence, a disadvantage that the scales attach to the electrode 6 to cause short circuit between the electrodes 6 and 7 can be eliminated as much as possible.

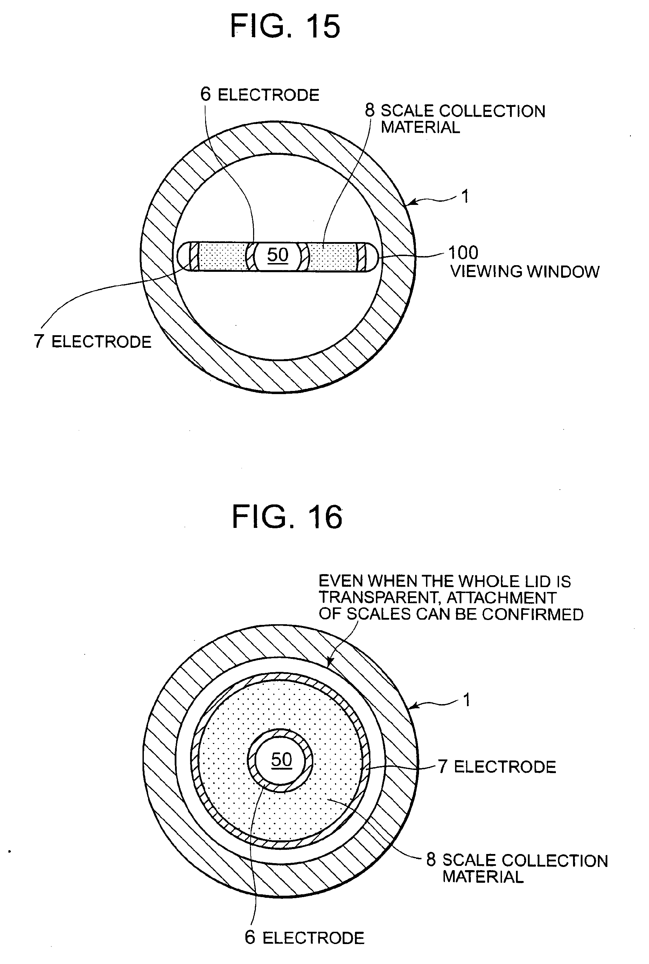

It is to be noted that in the ion removal device X of the present embodiment, when the upper end face of the treatment tank 1 is provided with the viewing window 100 as shown in FIG. 15, the scale collection material 8 received in the treatment tank 1 can visually be observed from the outside. In this case, especially when the scale collection material 8 is formed in a color (e.g., a color such as black or green as in the above second embodiment) having a complementary color relation with the scales trapped by the scale collection material 8, the scales trapped by the scale collection material 8 can easily visually be confirmed, and hence a time to change the scale collection material 8 can be grasped.

Furthermore, the present invention is not limited to the structure of FIG. 15. For example, as shown in FIG. 16, even when the upper end face or the lower end face of the treatment tank 1 or the whole treatment tank 1 is constituted so as to be transparent, a similar effect can be obtained.

In addition, when a part of the treatment tank 1 is constituted so as to be disassembled, the scale collection material 8 to which the scales have attached can be changed.

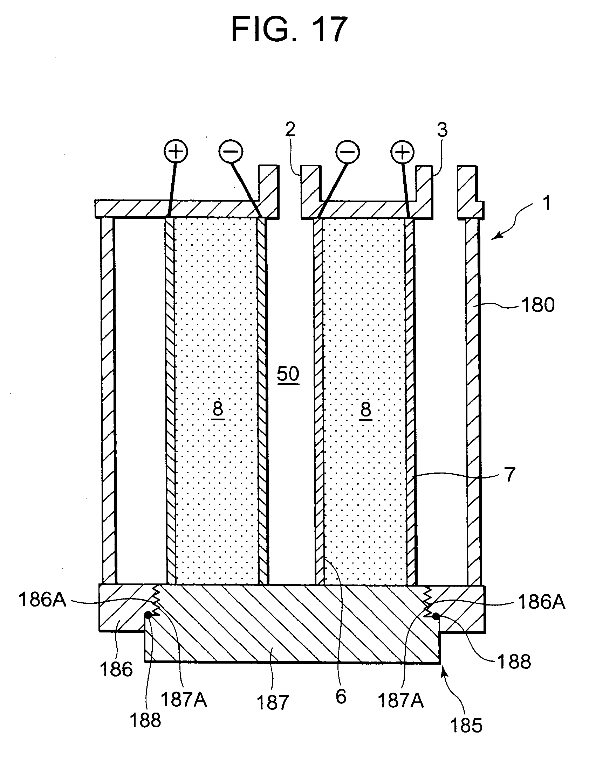

FIG. 17 shows one example of the treatment tank 1 in this case. In this treatment tank 1, the lower end of a main body 180 is openably closed with a lid member 185. Specifically, the lid member 185 is constituted of an donut-like outer lid 186 provided with a hole larger than the outer diameter of the electrode 7 in the center of the lid and a screw groove 186A in the whole periphery of the hole, and an inner lid 187 provided with a screw thread 187A to be engaged with the screw groove 186A in the outer periphery of the lid and attached to the hole of the outer lid 186.

In the ion removal device X including the treatment tank 1 having the above constitution, when the scale collection material 8 is changed, the power source of the ion removal device X is turned off to stop the energization of the electrodes 6, 7. Afterward, the above-mentioned engagement of the screw thread 187A of the inner lid 187 of the lid member 185 with the screw groove 186A of the outer lid 186 is released, and the integrated electrode 6, the scale collection material 8 and the electrode 7 are extracted from the lower surface of the treatment tank 1. Then, the electrode 7 which abuts on the outer peripheral surface of the scale collection material 8 and the electrode 6 which abuts on the inner peripheral surface are detached. Subsequently, the electrode 6 is inserted into the inner peripheral surface of the new scale collection material 8 or the cleaned scale collection material 8 from which the scales have been removed, and this electrode is inserted into the inner peripheral surface of the electrode 7. In consequence, the electrodes 6, 7 and the scale collection material 8 can be integrated. Then, the above-mentioned integrated electrodes 6, 7 and the scale collection material 8 are inserted into the treatment tank 1, an O-ring 188 is arranged, and the screw thread 187A is engaged with the screw groove 186A, thereby assembling the device again. The scale collection material 8 having the above structure can easily be changed.
At this time, when the O-ring 188 is attached to the outer peripheral edge of the screw groove 186A, the water tightness of the treatment tank 1 can be improved, and a disadvantage that the for-treatment water leaks from the treatment tank 1 can be prevented. It is to be noted that the present invention is not limited to a screw-in type shape as in the structure of the ion removal device U of the present embodiment shown in FIG. 17. Even when the lid members have such a shape as to be fixed with screws, the members can be unscrewed to disassemble the ion removal device, and the scale collection material 8 as the ion collection means can be changed.

It is to be noted that it has been described above that the electrodes 6, 7 and the scale collection material 8 arranged in the treatment tank 1 are once removed from the treatment tank 1, and detached to change the scale collection material 8, but this is not restrictive. The scale collection material 8 only may be removable from the treatment tank 1. Embodiment 6

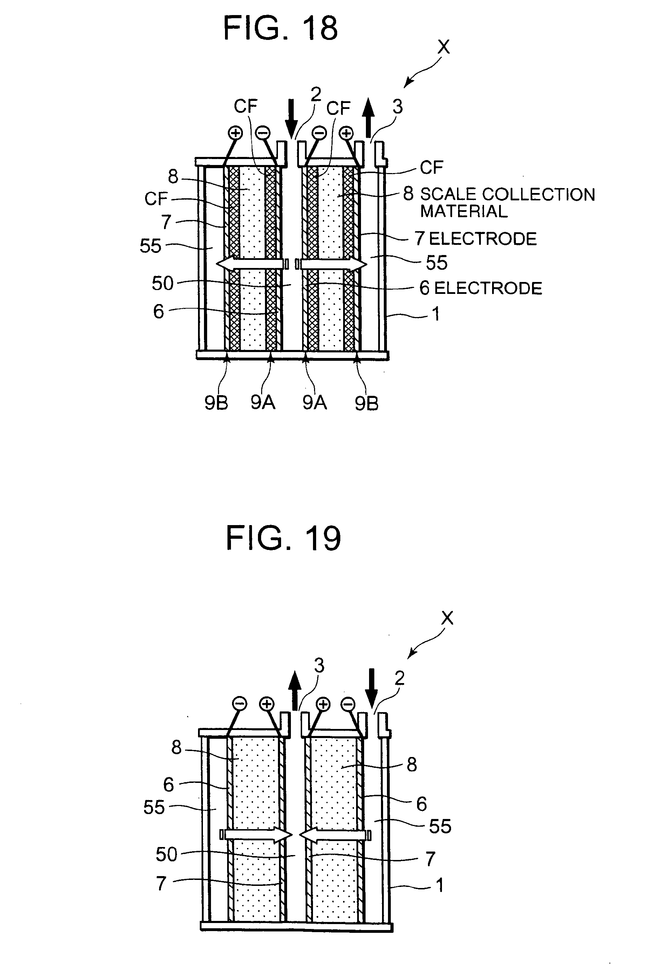

It is to be noted that in the above fifth embodiment, platinum electrodes are used as the electrodes 6, 7 in the same manner as in the first embodiment. However, as in the above fourth embodiment, the electrodes 6, 7 made of platinum or the like may be combined with a conductor (e.g., carbon fibers CF) to constitute both electrodes 9A, 9B (FIG. 18). Thus, in a case where the platinum electrodes 7, 8 are combined with the carbon fibers CF to form the electrode 9A constituting a cathode and the electrode 9B constituting an anode to especially obtain a structure in which the platinum electrodes 7, 8 are combined with the carbon fibers CF to form the electrode 9A constituting the cathode, a contact area between for-treatment water and the electrode 9A enlarges. Therefore, a salt generation efficiency improves, and salt can be collected by a scale collection material 8. In consequence, the collection efficiency of the scale collection material 8 can be improved.

### Embodiment 7

Moreover, in the above fifth and sixth embodiments, the inflow port 2 is formed in the center of the treatment tank 1 in the axial center direction, and the outflow port 3 is formed on the outer peripheral side of the inflow port to obtain a constitution in which the for-treatment water is allowed to flow from the center into the treatment tank 1, is discharged outwards and is then discharged from the outflow port 3. However, as shown in FIG. 19, an outflow port 3 is formed in the center of a treatment tank 1 in an axial center direction, and an inflow port 2 is formed in the periphery of the outflow port. Moreover, an electrode 6 is arranged on the outer peripheral surface of a scale collection material 8, and the scale collection material 8 is arranged on the inner peripheral surface of an electrode 7. Even in this case, the present invention is effective.

In this case, since for-treatment water flows from an externally arranged cathode electrode 6 side to an internally arranged anode electrode 7 side in the treatment tank 1, a contact area between the for-treatment water and the electrode 6 positioned on the outer side and constituting the cathode enlarges, so that a salt generation efficiency can be improved. In consequence, the collection efficiency of the scale collection material 8 can be improved.

### Embodiment 8

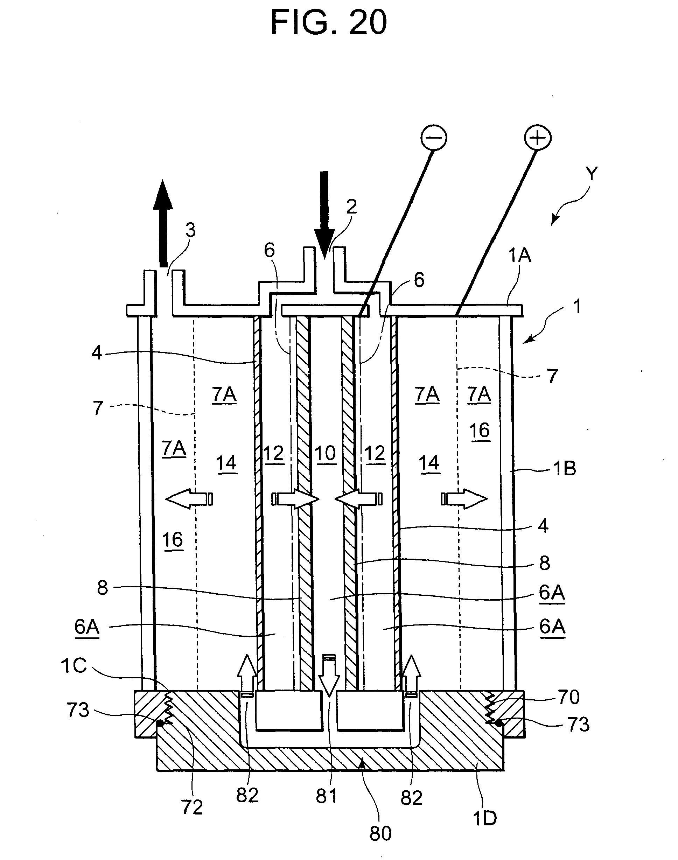

Next, FIG. 20 shows a schematic explanatory diagram of an ion removal device according to an eighth embodiment of the ion removal device of the present invention. An ion removal device Y of the present embodiment is constituted of a treatment tank 1; a pair of electrodes 6, 7 immersed into for-treatment water of this treatment tank 1; an ion exchange membrane 4 which divides the for-treatment water in the treatment tank 1 into an anode chamber 7A side where the electrode 7 constituting an anode is positioned and a cathode chamber 6A side where an electrode 6 constituting a cathode is positioned; and a scale collection material 8 as ion collection means. It is to be noted that in FIG. 20, the components denoted with the same reference numerals as those of FIGS. 1 to 19 produce similar effects or perform similar functions, and hence the description thereof is omitted.

The treatment tank 1 is constituted of a vertically long cylindrical main body 1B having an upper surface 1A provided with an inflow port 2 and an outflow port 3 for for-treatment water and a lower surface provided with an opening 1C, and a lid member 1D which closes the opening 1C in the lower surface of this treatment tank 1. Moreover, the inner peripheral edge of the opening 1C of the main body 1B is provided with a screw groove 70 to be engaged with a screw thread 72 formed on the outer peripheral edge of the lid member 1D, and an O-ring 73 is attached to the whole periphery of the screw groove 70 on the outer side (the lower outer side) of the screw groove 70. Then, the screw thread 72 of the lid member 1D is engaged with the screw groove 70 of the opening 1C, whereby the opening 1C can be closed with the lid member 1D in a watertight manner.

The electrodes 6, 7 are hollow cylindrical electrodes concentrically arranged away from each other in a non-contact state, and the electrode 7 is positioned on the outer surface side of the electrode 6. That is, the electrode 7 is arranged concentrically with the electrode 6 on the outer surface side of the hollow cylindrical electrode 6 with a predetermined space being left between the electrode and the electrode 6. In the present embodiment, as the electrodes 6, 7, electrodes obtained by processing platinum into a mesh-like shape are used. Thus, since the electrodes 6, 7 are processed into the mesh-like electrodes, the electrodes have such water-passing structure that the for-treatment water can be circulated.

A scale collection material 8 of the present embodiment is arranged concentrically with the electrodes 6, 7, and shows a hollow cylindrical shape. Then, the scale collection material 8 is arranged on the downstream side of the electrode 6 constituting a cathode in the flow path of the for-treatment water to be circulated. Specifically, the scale collection material 8 is arranged on the inner surface side of the electrode 6, and the for-treatment water passes through the scale collection material 8 via the electrode 6. The scale collection material 8 of the present embodiment is also an insulator as described in the above embodiments, and as the scale collection material, an insulating material, for example, a synthetic resin such as polypropylene (PP), polyethylene (PE) or acryl or a ceramic material such as alumina or zeolite is processed into a porous material, a particle-like shape, non-woven cloth, hollow yarn felt or the like. The scale collection material 8 of the present embodiment is also provided with such water-passing structure that the for-treatment water can be circulated in the same manner as in the electrodes 6, 7.

The ion exchange membrane 4 is a cation exchange membrane capable of transmitting cations only, and is provided so as to separate, from each other, an anode chamber 10 side where the electrode 7 constituting an anode is positioned and a cathode chamber 6A side where the electrode 6 constituting a cathode is positioned. Moreover, the ion exchange membrane 4 of the present embodiment is arranged concentrically with the electrodes 6, 7 and the scale collection material 8, and is arranged between the electrode 6 and the electrode 7.

On the other hand, the lid member 1D is provided with a passage 80 through which the for-treatment water flows. One end of this passage 80 opens in the center of the lid member 1D, and a one-end opening 81 communicates with the space 10 formed on the inner peripheral side of the scale collection material 8. Moreover, other-end openings 82 of the passage 80 are provided in positions on the outer sides of the opening 81 of the lid member 1D, and communicate with a space 14 formed between the ion exchange membrane 4 and the electrode 7. In the present embodiment, two other-end openings 82 are formed in the passage 80. That is, the passage 80 of the present embodiment extends downward from the one-end opening 81 in the lid member 1D, and is branched into two passages from the opening. Both the branched passages extend along a horizontal direction (an outer peripheral direction) in the lid member 1D, then rise and open in the positions corresponding to the space 14 formed between the ion exchange membrane 4 and the second electrode 7.

Moreover, the inflow port 2 formed in the upper surface of the treatment tank 1 is provided so as to communicate with a space 12 formed between the electrode 6 and the ion exchange membrane 4, and the outflow port 3 is provided so as to communicate with a space 16 formed between the electrode 7 and the inner periphery of the main body 1B of the treatment tank 1.
Here, in the present invention, the electrodes 6, 7, the ion exchange membrane 4 and the scale collection material 8 are integrated. In this case, one end (the lower end) of each of the electrodes 6, 7, the ion exchange membrane 4 and the scale collection material 8 may be attached to the lid member 1D to integrate the electrodes 6, 7, the ion exchange membrane 4 and the scale collection material 8 with the lid member 1D. Both ends of each of the electrodes 6, 7, the ion exchange membrane 4 and the scale collection material 8 may be fitted into frame bodies and integrated. Moreover, by another method, the electrodes 6, 7, the ion exchange membrane 4 and the scale collection material 8 may be integrated. It is to be noted that in the present embodiment, the lower ends of the electrodes 6, 7, the ion exchange membrane 4 and the scale collection material 8 are detachably attached to the upper surface of the lid member 1D. When the electrodes 6, 7, the ion exchange membrane 4 and the scale collection material 8 are integrated in this manner, an electrolysis treatment and scale collection can be performed in a single system (in the treatment tank 1). In consequence, the ion removal device can be miniaturized.

Next, the operation of the ion removal device Y of the present embodiment having the above constitution will be described. First, when the power source of the ion removal device Y is turned on, the energization of the electrodes 6, 7 is started. At this time, a current is applied to the electrodes 6, 7 with a current density of 10 milliamperes (mA)/square centimeter (cm²). In consequence, the electrode 6 on the upstream side in the flow path of the for-treatment water constitutes a cathode, and the electrode 7 on a downstream side constitutes an anode. That is, when the electrodes 6, 7 energize the for-treatment water in an electrolysis chamber 5, the electrode 6 as the cathode causes the following reaction:

4H⁺+4e⁻+(4OH⁻) → 2H₂+(4OH⁻).

The electrode 7 as the anode causes the following reaction:

2H₂O → 4H⁺+O₂+4e⁻.

Here, a hydroxide ion (OH⁻) generated by the electrode 6 is a very strong base. Owing to the presence of the ion exchange membrane 4, this hydroxide ion cannot move to the anode chamber 7A side provided with the electrode 7, and hence remains on the cathode chamber 6A side. In consequence, the cathode chamber 6A side becomes alkaline.

On the other hand, the for-treatment water circulates through the treatment tank 1 of the ion removal device Y as shown by arrows in FIG. 20. That is, the for-treatment water flows from the inflow port 2 into the space 12 formed between the ion exchange membrane 4 and the electrode 6 in the cathode chamber 6A separated by the ion exchange membrane 4 in the treatment tank 1 of the ion removal device Y, and sequentially passes through the electrode 6 and the scale collection material 8 to reach the space 10 of the cathode chamber 6A formed in the inner surface of the scale collection material 8. At this time, since the cathode chamber 6A side becomes alkaline as described above, the hard components (the scale components) included in the for-treatment water reacts with a hydroxide ion to form salt (i.e., scales), and the salt attaches to the scale collection material 8 arranged on the downstream side of the electrode 6, and is collected.

Specifically, the ions of calcium, magnesium, potassium, silica and the like included as main scale components in the for-treatment water are deposited as hardly soluble salt such as calcium hydroxide, calcium carbonate or magnesium hydroxide. It is to be noted that when the for-treatment water includes the ions of phosphorus, sulfur, zinc and the like, calcium sulfate, calcium sulfite, calcium phosphate, zinc phosphate, zinc hydroxide, basic zinc carbonate or the like is sometimes deposited as the salt. It is to be noted that a part of the ions of calcium, magnesium, potassium, silica and the like constituting the scale components is directly deposited on the electrode 6, especially the inner peripheral surface of the electrode 6 on the downstream side in the flow path of the for-treatment water by an electrocrystallizing function.

The deposited scales flow to the scale collection material 8 on the downstream side of the electrode 6 in the flow path, attach to the surface of the scale collection material 8 on the electrode 6 side (i.e., the outer peripheral surface of the scale collection material 8), and attach from the surface to the scale collection material 8 so as to grow over the inside (the inner surface side) of the scale collection material 8 on the downstream side in the flow path.

Thus, according to the present invention, the ion exchange membrane 4 separates, from each other, the anode chamber 7A side where the electrode 7 as the anode is positioned and the cathode chamber 6A side where the electrode 6 as the cathode is positioned, whereby the hydroxide ion generated in the electrode 6 remains on the cathode chamber 6A side, and becomes alkaline, so that the deposition of the scales can be promoted. That is, the salt (the scales) is easily generated from the hard components (the scale components) of the for-treatment water. Then, the generated salt (scales) can efficiently be collected by the electrode 6 or the scale collection material 8 arranged on the downstream side of the electrode 6. In particular, the scales attached to the scale collection material 8 are seed crystals. That is, the scale attached to the scale collection material 8 is a nucleus, and the scale passing through the scale collection material 8 later attaches to the nucleus and grows, so that a removal efficiency can further be improved.

Furthermore, as described above, each of the electrodes 6, 7 and the scale collection material 8 has a water-passing structure, and the scale collection material 8 is made of an insulator. While circulating the for-treatment water without any trouble, the scales can be collected by the scale collection material 8.

On the other hand, the for-treatment water which has passed through the scale collection material 8 and from which the scale components have been removed flows from the one-end opening 81 of the lid member 1D positioned on the downside of the space 10 into the passage 80 in the lid member 1D, and is branched into two flows. Afterward, the water reaches the space 14 formed between the ion exchange membrane 4 and the electrode 7 in the other anode chamber 7A separated by the ion exchange membrane 4.

The for-treatment water of the space 14 passes through the electrode 7 to reach the space 16 of the anode chamber 7A formed in the inner surface of the treatment tank 1 and the outer surface of the electrode 7, and is discharged from the treatment tank 1 of the ion removal device Y from the outflow port 3 formed in the upper end of the space 16.

Thus, the scale collection material 8 is installed on the downstream side of the electrode 6, and the for-treatment water is circulated from the cathode chamber 6A side to the anode chamber 7A side, whereby it can be avoided as much as possible that the scales deposited on the electrode 6 attach to the electrode 6. In particular, when the flow rate of the for-treatment water is high, the scales once attached to the electrode 6 easily peel, and the peeled scales can be collected by the scale collection material 8 arranged on the downstream side of the electrode 6.

In addition, when a large amount of scales attach to the scale collection material 8, the circulation of the for-treatment water might be disturbed. Therefore, the scale collection material 8 needs to be changed. In this case, first the power of the ion removal device Y is turned off to stop the energization of the electrodes 6, 7. Next, the lid member 1D attached to the lower surface of the treatment tank 1 is detached to remove the integrated electrodes 6, 7, the ion exchange membrane 4 and the scale collection material 8.

Then, the scale collection material 8 attached to the lid member 1D is detached from the lid member 1D, and the new scale collection material 8 or the cleaned scale collection material 8 from which the scales have been removed is attached to the lid member 1D. Then, the lid member 1D integrated with the electrodes 6, 7, the ion exchange membrane 4 and the scale collection material 8 is inserted from the downside of the treatment tank 1, and the screw thread 72 formed on the outer peripheral edge of the lid member 1D is engaged with the screw groove 70 formed in the inner peripheral edge of the opening 1C of the main body 1B. Thus, the scale collection material 8 has a changeable structure, and hence the scale collection material 8 to which the scales have attached can easily be changed.

It is to be noted that in the ion removal device Y of the above embodiment, when the scale collection material 8 is constituted so as to beforehand carry, for example, seed crystals, the scales further easily attach to the scale collection material 8, and a collection efficiency can further be improved.

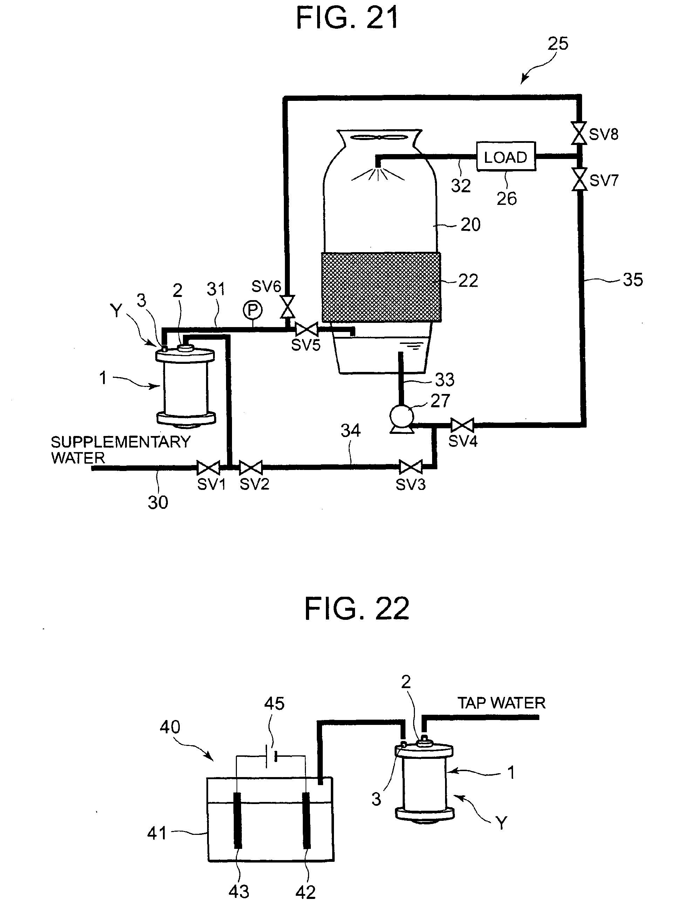

Even the ion removal device Y of the present embodiment can be applied to various devices using the for-treatment water, for example, a cooling tower (FIG. 21) in the same manner as in the above second embodiment and an electrolytic water generation device (FIG. 22) in the same manner as in the third embodiment. It is to be noted that a constitution and an operation in a case where the device is applied to the cooling tower are the same as or similar to those described in detail in Embodiment 2, a constitution and an operation in a case where the device is applied to the electrolytic water generation device are the same as or similar to those described in Embodiment 3, and hence the description thereof is omitted here.

Furthermore, even in the present embodiment, for example, a viewing window may be formed in the lid member 1D, or the whole lid member 1D may be transparent, so that the scale collection material 8 can visually be observed from the outside of the ion removal device Y. In particular, when the scale collection material 8 is formed in a color (e.g., a color such as black or green as in the above second embodiment so that white scales become conspicuous) having a complementary color relation with the scales trapped by the scale collection material 8, the scales attached to the scale collection material 8 can easily visually be confirmed, and a time to change the material can be grasped.

### Embodiment 9

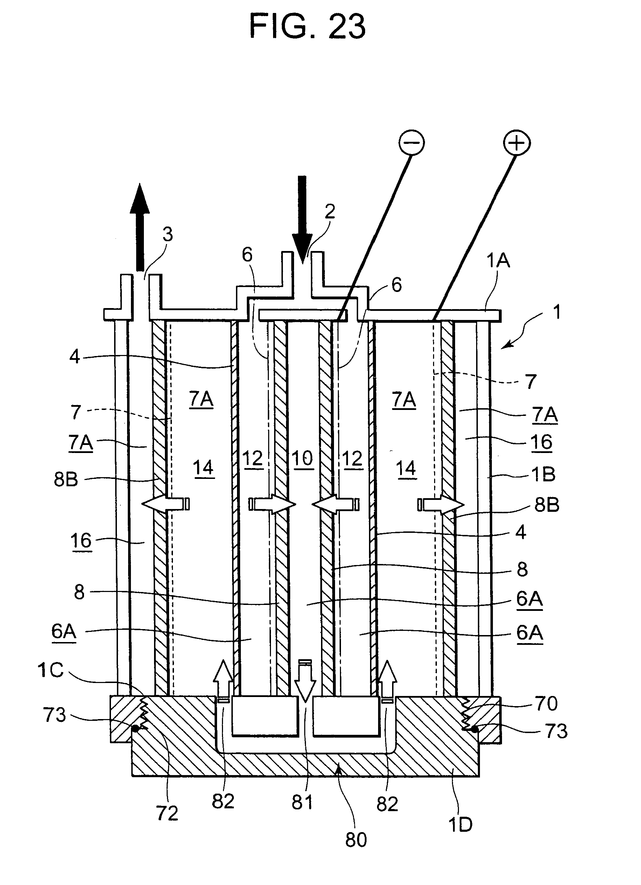

It is to be noted that in the above eighth embodiment, the single scale collection material 8 is arranged on the inner surface side of the electrode 6, but this is not restrictive, and a plurality of scale collection materials 8 may be provided. FIG. 23 is a schematic explanatory diagram of an ion removal device in which a scale collection material 8B is installed on the outer surface side of the electrode 7 in addition to the above scale collection material 8. It is to be noted that in FIG. 23, the components denoted with the same reference numerals as those of FIGS. 1 to 22 produce the same or similar effects or perform the same or similar functions, and hence the description thereof is omitted. This scale collection material 8B is arranged concentrically with electrodes 6, 7 and an ion exchange membrane 4 in the same manner as in the above scale collection material 8, and has a hollow cylindrical shape. Moreover, the scale collection material 8B is arranged in a position on the outer surface side of the electrode 7 and the inner surface side from an outflow port 3.

For-treatment water circulates through this ion removal device as shown by arrows in FIG. 23. That is, the for-treatment water flows from an inflow port 2 into a space 12 in a cathode chamber 6A separated by the ion exchange membrane 4 in a treatment tank 1, and sequentially passes through the electrode 6 and the scale collection material 8 to reach a space 10 of the cathode chamber 6A formed in the inner surface of the scale collection material 8. Then, the water flows from a one-end opening 81 of a lid member 1D positioned on the downside of the space 10 into a passage 80 of the lid member 1D. In the passage, the water is branched into two flows, and then reaches a space 14 of another anode chamber 7A separated by the ion exchange membrane 4. The for-treatment water of the space 14 sequentially passes through the electrode 7 and the scale collection material 8B to reach a space 16 of an anode chamber 7A, and is discharged from the treatment tank 1 through the outflow port 3 formed in the upper end of the space 16.

Thus, in a case where the scale collection material 8B is provided in addition to the scale collection material 8, scales which cannot completely be collected by the scale collection material 8 can be collected by the scale collection material 8B. In consequence, a scale removal efficiency can further be improved.

### Embodiment 10

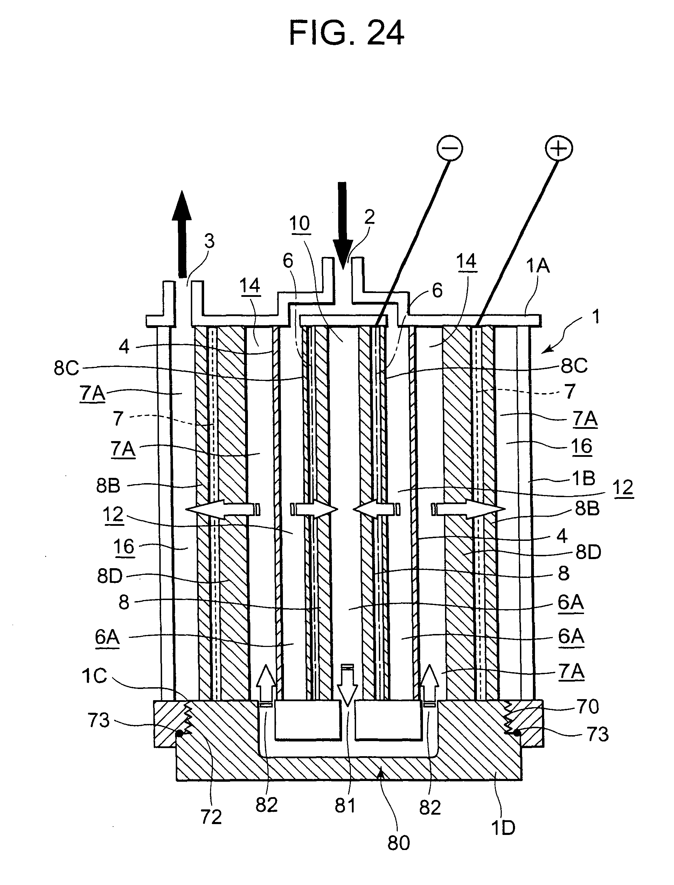

Furthermore, in addition to the above scale collection material 8 and the scale collection material 8B, as shown in FIG. 24, a scale collection material 8C may be provided on the outer surface side of an electrode 6, and a scale collection material 8D may be provided on the inner surface side of an electrode 7. In this case, as shown by arrows in FIG. 24, for-treatment water flows from an inflow port 2 into a space 12 of a cathode chamber 6A separated by an ion exchange membrane 4 in a treatment tank 1, and sequentially passes through the scale collection material 8C, the electrode 6 and the scale collection material 8 to reach a space 10 of the cathode chamber 6A formed in the inner surface of the scale collection material 8. Then, the water flows from a one-end opening 81 of a lid member 1D positioned on the downside of the space 10 into a passage 80 of the lid member 1D, is branched into two flows in the passage, and then reaches a space 14 of another anode chamber 7A separated by the ion exchange membrane 4. The for-treatment water of the space 14 sequentially passes through the scale collection material 8D, the electrode 7 and the scale collection material 8B to reach a space 16 of the anode chamber 7A, and is discharged from the treatment tank 1 via an outflow port 3 formed in the upper end of the space 16.

Thus, when the scale collection materials 8, 8B, 8C and 8D are provided on both sides of the electrodes 6 and 7, a scale collection efficiency can further be improved. In particular, when the electrodes 6, 7 are made of a noble metal as in platinum electrodes or the like, the platinum electrodes are expensive. Therefore, the attachment of scales to the electrode 6 is inhibited, and an ion removal device is preferably operated without performing polarity conversion, if possible. To solve the problem, as described above, the scale collection materials 8C, 8D are also provided on the outer surface side of the electrode 6 and the inner surface side of the electrode 7. In consequence, the scales are collected by these scale collection materials 8, 8B, 8C and 8D, a disadvantage that the scales attach to the electrode 6 is avoided as much as possible, and the durability of the electrodes 6, 7 can be improved.

### Embodiment 11

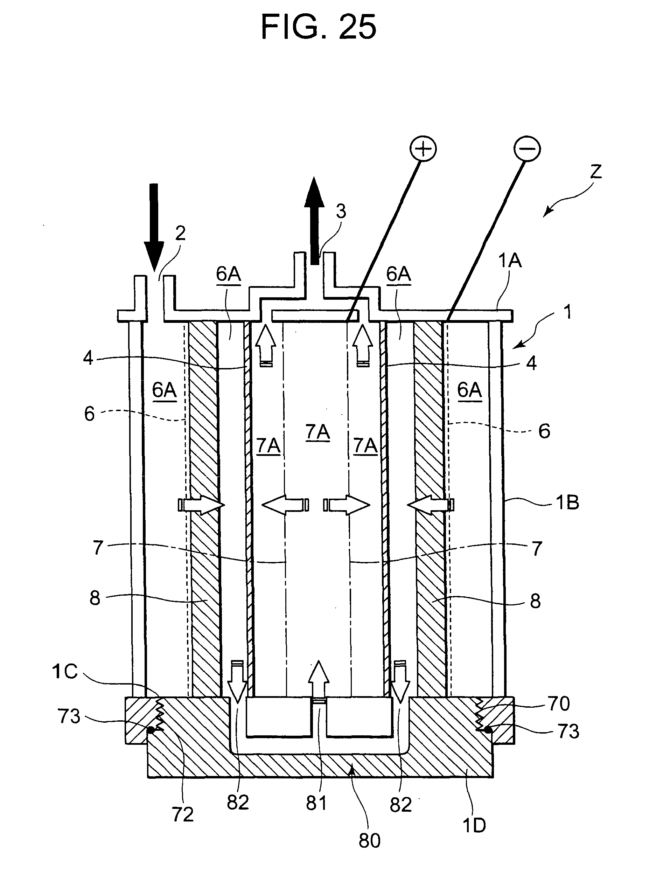

It is to be noted that in the ion removal device Y according to the above eighth to tenth embodiments, as shown by black arrows in FIGS. 20 to 24, the for-treatment water flows from the inflow port 2 formed in the substantially central position of the treatment tank 1 in an axial center direction into the treatment tank 1, and is discharged from the treatment tank 1 through the outflow port 3 formed on the outer surface side. However, even when an outflow port 3 is formed in the substantially central position of a treatment tank 1 in an axial center direction and an inflow port 2 is formed on the outer surface side of the outflow port as shown in FIG. 25, the present invention is effective. In this case, as shown in FIG. 25, it is preferable that an electrode 6 as a cathode is arranged on an outer side and that an electrode 7 as an anode is arranged on an inner side. In FIG. 25, the components denoted with the same reference numerals as those of FIGS. 1 to 24 produce the same or similar effects or perform the same or similar functions, and hence the description thereof is omitted.

Here, as shown by arrows in FIG. 25, for-treatment water flows from an outer side to an inner side in an ion removal device Z of the present embodiment. That is, the for-treatment water flows from the inflow port 2 into a space formed between the electrode 6 on a cathode chamber 6A side in the treatment tank 1 of the ion removal device Z and the inner surface of the treatment tank 1, and sequentially passes through the electrode 6 and a scale collection material 8 to reach a space of the cathode chamber 6A formed between the inner surface of the scale collection material 8 and the outer surface of an ion exchange membrane 4. At this time, the cathode chamber 6A side becomes alkaline as described above. Therefore, hard components (scale components) included in the for-treatment water react with a hydroxide ion to form salt (i.e., scales), and the salt attaches to the scale collection material 8 arranged on the downstream side of the electrode 6, and is collected.

On the other hand, the for-treatment water which has passed through the scale collection material 8 and from which the scale components have been removed flows into a passage 80 in a lid member 1D from two other-end openings 82 of the lid member 1D positioned on the downside of a space of the cathode chamber 6A formed between the inner surface of the scale collection material 8 and the outer surface of the ion exchange membrane 4. The flows of the water join each other to reach a space of an anode chamber 7A formed on the inner surface side of the electrode 7.

The for-treatment water of the space passes through the electrode 7 to flow into the space of the anode chamber 7A formed between the inner surface of the ion exchange membrane 4 and the electrode 7, and is discharged from the treatment tank 1 through the outflow port 3 formed in the upper end of the space.

Thus, even in the constitution of the ion removal device Z according to the present embodiment, in the same manner as in the above embodiments, scales deposited on the electrode 6 can be collected and removed by the scale collection material 8 installed on the downstream side of the electrode 6. Moreover, an effect similar to that of the above embodiments can be obtained. Furthermore, as in the present embodiment, the for-treatment water is circulated from the electrode 6 side on the outer side of the scale collection material 8. In consequence, a contact area between the for-treatment water and the electrode 6 as the cathode enlarges, and a salt generation efficiency can be improved. Therefore, the collection efficiency of the scale collection material 8 can further be improved.

### Embodiment 12

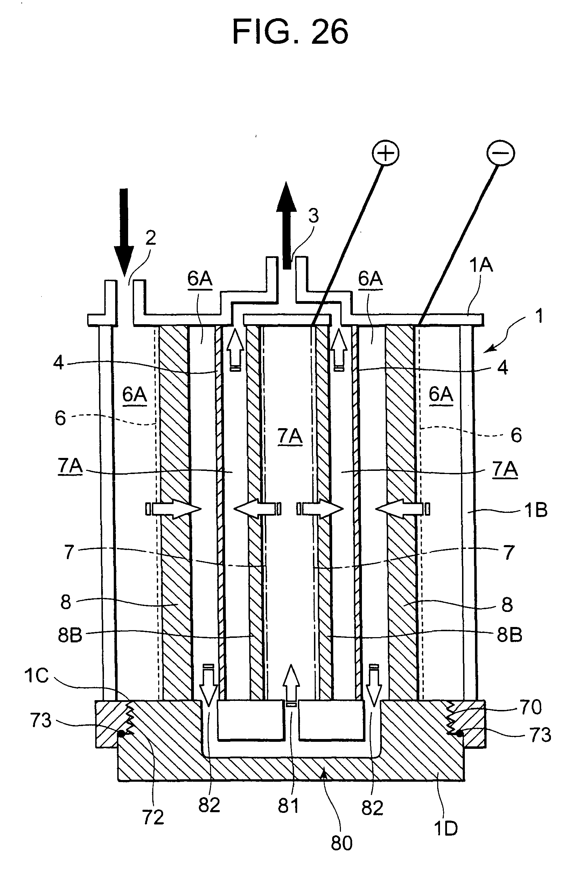

It is to be noted that in the above eleventh embodiment, the single scale collection material 8 is arranged on the inner surface side of the electrode 6, but this is not restrictive, and a plurality of scale collection materials 8 may be provided. FIG. 26 shows that a scale collection material 8B is also installed on the outer surface side of an electrode 7 in addition to the above scale collection material 8. It is to be noted that in FIG. 26, the components denoted with the same reference numerals as those of FIGS. 1 to 25 produce the same or similar effects or perform the same or similar functions, and hence the description thereof is omitted. This scale collection material 8B is arranged concentrically with the electrodes 6, 7 and an ion exchange membrane 4 in the same manner as in the scale collection material 8, and has a hollow cylindrical shape. Moreover, the scale collection material 8B is arranged in a position on the outer surface side of the electrode 7 and the inner surface side from an outflow port 3.

Thus, when the scale collection material 8B is provided in addition to the scale collection material 8, scales can further be collected. In consequence, a scale removal efficiency can be improved.

### Embodiment 13

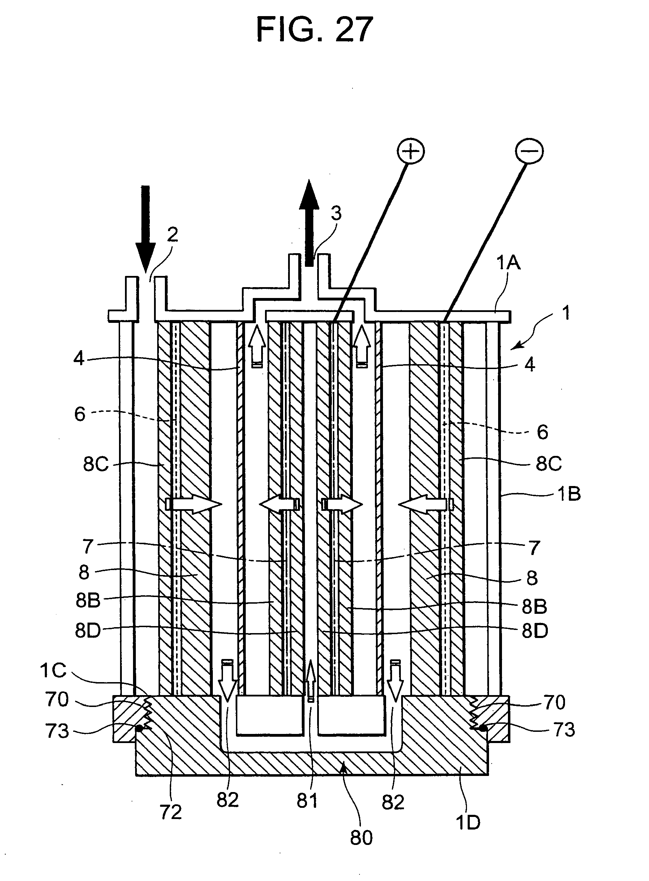

Furthermore, when a scale collection material 8C is provided on the outer surface side of an electrode 6 and a scale collection material 8D is provided on the inner surface side of an electrode 7 in addition to a scale collection material 8 and a scale collection material 8B as shown in FIG. 27, a scale collection efficiency can further be improved.

In particular, when the scales attach to the electrodes 6, 7, the polarities of the electrodes need to be converted to peel the scales. However, a peeling operation due to such polarity conversion deteriorates the electrodes. When the electrodes 6, 7 are made of a noble metal as in platinum electrodes or the like in the present embodiment, the platinum electrodes are expensive, and hence it is preferable that the attachment of the scales to the electrode 6 is inhibited to operate an ion removal device without performing any polarity conversion, if possible. To solve the problem, the scale collection materials 8C, 8D are also provided on the inner surface side of the electrodes 6, 7 as described above. In consequence, these scale collection materials 8, 8B, 8C and 8D collect scales, a disadvantage that the scales attach to the electrode 6 is avoided as much as possible, and the durability of the electrodes 6, 7 can be improved.

## Claims

1. An ion removal device in which at least a pair of electrodes and ion collection means immersed into for-treatment water are integrated.

2. The ion removal device according to claim 1, further comprising an ion exchange membrane which separates the for-treatment water into the for-treatment water on an anode chamber side where the electrode constituting an anode is positioned and the for-treatment water on a cathode chamber side where the electrode constituting a cathode is positioned, the ion exchange membrane being integrated with the electrodes and the ion collection means.

3. The ion removal device according to claim 1 or 2, wherein the ion collection means is arranged between the electrodes.

4. The ion removal device according to any one of claims 1 to 3, wherein the ion collection means is arranged in a position between the downstream side of the first electrode and the upstream side of the second electrode in a flow path through which the for-treatment water is circulated.

5. The ion removal device according to claim 3 or 4, wherein the for-treatment water is circulated from the side of the electrode constituting the cathode to the side of the electrode constituting the anode.

6. The ion removal device according to any one of claims 1 to 5, wherein the electrodes and the ion collection means are concentrically arranged, and the for-treatment water is circulated from an outer electrode side.

7. The ion removal device according to any one of claims 1 to 6, wherein the electrodes and the ion collection means have water-passing structure, and the ion collection means is an insulating scale collection material configured to collect scales from the for-treatment water.

8. The ion removal device according to any one of claims 1 to 6, wherein the electrodes and the ion collection means have water-passing structure, the ion collection means includes an insulating scale collection material configured to collect scales from the for-treatment water, and a conductive surfactant collection material which has a conductive relation with the first electrode only and which is configured to collect a surfactant from the for-treatment water, and
the ion collection means controls the value of a current to be applied to the electrodes to selectively execute the scale removal treatment step of the scale collection material and the surfactant removal treatment step of the surfactant collection material.

9. The ion removal device according to claim 8, further comprising:
means for switching the polarities of potentials to be applied to the electrodes in the surfactant removal treatment step, depending on whether the surfactant is anionic or cationic.

10. The ion removal device according to claim 8 or 9, wherein when a negative potential is applied to the first electrode in the surfactant removal treatment step, the current value is set to 500 mA or less.

11. The ion removal device according to any one of claims 7 to 10, wherein the scale collection material constituting the ion collection means is allowed to carry seed crystals.

12. The ion removal device according to any one of claims 7 to 11, wherein the scale collection material constituting the ion collection means shows a color having a complementary color relation with the scales trapped by the scale collection material.

13. The ion removal device according to any one of claims 1 to 12, wherein the ion collection means has a changeable structure.

14. The ion removal device according to any one of claims 1 to 13, wherein the ion collection means is visible from the outside.

15. A method for using the ion removal device according to any one of claims 1 to 14, which is **characterized by** predicting a time to change the ion collection material based on a difference between a hydraulic pressure on the inflow side of the for-treatment water and a hydraulic pressure on the outflow side of the for-treatment water.

## Amended claims

### Amended claims under Art. 19.1 PCT

**1.** An ion removal device in which at least a pair of water-passing electrodes and ion collection means immersed in for-treatment water are integrated.

**2.** The ion removal device according to claim 1, wherein the ion collection means includes an insulating scale collection material, and the electrodes are made of a conductive porous material.

**3.** An ion removal device in which a conductive porous material configured to function as electrodes and an insulating scale collection material immersed in for-treatment water are integrated.

**4.** The ion removal device according to any one of claims 1 to 3, further comprising an ion exchange membrane which separates the for-treatment water into the for-treatment water on an anode chamber side where the electrode constituting an anode is positioned and the for-treatment water on a cathode chamber side where the electrode constituting a cathode is positioned, the ion exchange membrane being integrated with the electrodes and the ion collection means.

**5.** The ion removal device according to any one of claims 1 to 4, wherein the ion collection means is arranged in a position between the downstream side of the first electrode and the upstream side of the second electrode in a flow path through which the for-treatment water is circulated.

**6.** The ion removal device according to claim 5, wherein the for-treatment water is circulated from the side of the electrode constituting the cathode to the side of the electrode constituting the anode.

**7.** The ion removal device according to any one of claims 1 to 6, wherein the electrodes and the ion collection means are concentrically arranged, and the for-treatment water is circulated from an outer electrode side.

**8.** The ion removal device according to any one of claims 1 to 7, wherein the ion collection means includes a conductive surfactant collection material which has a conductive relation with the first electrode only and which is configured to collect a surfactant from the for-treatment water, and the ion collection means controls the value of a current to be applied to the electrodes to selectively execute the scale removal treatment step of the scale collection material and the surfactant removal treatment step of the conductive porous material and/or the surfactant collection material.

**9.** The ion removal device according to claim 8, further comprising:
means for switching the polarities of potentials to be applied to the electrodes in the surfactant removal treatment step, depending on whether the surfactant is anionic or cationic.

**10.** The ion removal device according to claim 8 or 9, wherein when a negative potential is applied to the first electrode in the surfactant removal treatment step, the current value is set to 500 mA or less.

**11.** The ion removal device according to any one of claims 2 to 10, wherein the scale collection material constituting the ion collection means is allowed to carry seed crystals.

**12.** The ion removal device according to any one of claims 2 to 11, wherein the scale collection material constituting the ion collection means shows a color having a complementary color relation with the scales trapped by the scale collection material.

**13.** The ion removal device according to any one of claims 1 to 12, wherein the ion collection means has a changeable structure.

**14.** The ion removal device according to any one of claims 1 to 13, wherein the ion collection means is visible from the outside.
